# EUROPÄISCHE PATENTANMELDUNG

(11) **EP 4 067 650 A1**
(43) Veröffentlichungstag der Anmeldung: **05.10.2022**
(21) Anmeldenummer: 22160504.1
(22) Anmeldetag: 07.03.2022
(51) Int. Cl.: F03D 80/00, F03D 80/60, H02K 9/02

(54) **LUFTKÜHLVORRICHTUNG, GENERATOR, LUFTFÜHRUNGSVORRICHTUNG, WINDENERGIEANLAGE UND VERFAHREN ZUR HERSTELLUNG EINES GENERATORS UND EINER WINDENERGIEANLAGE**

(30) Priorität: 29.03.2021 DE 102021107905
(71) Anmelder: Wobben Properties GmbH, 26607 Aurich (DE)
(72) Erfinder: Daboul, Hussam, 26624 Südbrookmerland (DE); Giengiel, Wojciech, 26607 Aurich (DE); Stemberg, Jochen, 26607 Aurich (DE)
(74) Vertreter: Eisenführ Speiser

(57) **Zusammenfassung**

Luftkühlvorrichtung (200) zur Luftkühlung eines Generators einer Windenergieanlage (100) mittels Wind (W), umfassend eine Kühleinheit (210) des Generators mit einer Kühleinheits-Außenfläche (210a), welche der Wind (W) zur Luftkühlung des Generators im Betrieb der Windenergieanlage (100) anströmt, dadurch gekennzeichnet, dass eine Luftleitvorrichtung (220) an der Kühleinheits-Außenfläche (210a) der Kühleinheit (210) angeordnet ist und eine erste Luftleiteinheit (221) aufweist, die sich ausgehend von der Kühleinheits-Außenfläche (210a) spitzwinklig nach außen erstreckt und mit der der Kühleinheit (210) einen konvergieren-den ersten Luftleitkanal (K1) bildet, der ausgebildet ist, in einem Betriebszustand der Windenergieanlage (100) den Wind (W) zur Luftkühlung in Richtung der Kühleinheit (210) zu leiten.

## Beschreibung

Die Erfindung betrifft eine Luftkühlvorrichtung zur Luftkühlung eines Generators einer Windenergieanlage mittels Wind, umfassend eine Kühleinheit des Generators mit einer Kühleinheits-Außenfläche, welche der Wind zur Luftkühlung des Generators im Betrieb der Windenergieanlage anströmt. Ferner betrifft die Erfindung einen Generator einer Windenergieanlage.

Weiterhin betrifft die Erfindung eine Luftführungsvorrichtung zur Bereitstellung von Wind zur Luftkühlung an einer Kühleinheit eines Generators einer Windenergieanlage, umfassend eine Rotationseinheit eines aerodynamischen Rotors der Windenergieanlage mit einer Rotationseinheits-Außenfläche, entlang welcher der Wind im Betrieb der Windenergieanlage strömt, wobei die Rotationseinheit Anschlüsse zur Befestigung und/oder Durchgangsöffnungen zur Durchführung von Rotorblättern des aerodynamischen Rotors aufweist. Ferner betrifft die Erfindung eine Windenergieanlage.

Schließlich betrifft die Erfindung ein Verfahren zur Herstellung eines Generators einer Windenergieanlage mit einer Luftkühlvorrichtung und ein Verfahren zur Herstellung einer Windenergieanlage.

Windenergieanlagen sind bekannt. Ein derzeit gängiger Typ einer Windenergieanlage ist eine sogenannte Horizontalachsenwindenergieanlage mit üblicherweise drei Rotorblättern. Solche Windenergieanlagen weisen zunehmend eine größere Bauform auf, nämlich insbesondere höhere Naben- oder Achshöhen und größere Rotordurchmesser mit entsprechend größerem Generator und größerer Einspeiseleistung. Größere Generatoren erfordern höhere Kühlleistungen, um den Generator mit einer optimalen Betriebstemperatur zu betreiben.

Es ist bekannt, Generatoren von Windenergieanlagen durch eine aktive Kühleinheit mittels einem Kühlmedium, beispielsweise Luft oder Kühlflüssigkeit, zu kühlen. Hierzu erzeugen aktive Kühleinheiten einen Kühlmediumstrom, beispielsweise einen Luftstrom, der entlang der zu kühlenden Flächen des Generators geführt wird. Ein solcher Luftstrom wird beispielsweise mit einem Lüfter erzeugt. Alternativ kann zur Kühlung eines Generators Kühlflüssigkeit durch Rohre geführt werden, welche die Wärme abtransportieren. Mit solchen aktiven Kühleinheiten lassen sich Generatoren zwar mit einer optimalen Betriebstemperatur betreiben. Allerdings sind Windenergieanlagen mit solch aktiven Kühleinheiten einerseits in der Herstellung und andererseits im Betrieb, insbesondere hinsichtlich Instandhaltungs- und Wartungsarbeiten, teuer.

Es ist auch bekannt, Generatoren von Windenergieanlagen passiv durch Wind, d.h. einen Luftstrom, zu kühlen. Hierzu ist vorgesehen, dass eine Kühleinheit des Generators von dem Wind angeströmt wird, welcher auch für die Energieerzeugung durch die Windenergieanlagen genutzt wird. Allerdings lassen sich Generatoren gängiger Windenergieanlage mit Wind nur unzureichend passiv kühlen. Üblicherweise reicht der Wind nicht aus, um Generatoren mit einer optimalen Betriebstemperatur zu betreiben.

Das Deutsche Patent- und Markenamt hat in der Prioritätsanmeldung zu vorliegender Anmeldung folgenden Stand der Technik recherchiert: DE 103 51 844 A1, DE 10 2007 042 338 A1, US 8 047 774 B2, EP 2 546 595 A1, CN 104956075 A.

Der Erfindung liegt daher die Aufgabe zugrunde, eine Luftkühlvorrichtung, einen Generator, eine Luftführungsvorrichtung, eine Windenergieanlage und eine Verfahren zur Herstellung eines Generators sowie einer Windenergieanlage bereitzustellen, welche die genannten Probleme adressiert. Insbesondere liegt der Erfindung die Aufgabe zugrunde, eine Luftkühlvorrichtung, einen Generator, eine Luftführungsvorrichtung, eine Windenergieanlage und eine Verfahren zur Herstellung eines Generators sowie einer Windenergieanlage bereitzustellen, welche einen Betrieb eines Generators einer Windenergieanlage mit einer optimalen Betriebstemperatur ermöglicht. Ferner liegt der Erfindung in bevorzugter Weise die Aufgabe zugrunde, eine Luftkühlvorrichtung, einen Generator, eine Luftführungsvorrichtung, eine Windenergieanlage und eine Verfahren zur Herstellung eines Generators sowie einer Windenergieanlage bereitzustellen, welche eine kostengünstigere Herstellung und einen kotengünstigeren Betrieb einer Windenergieanlage ermöglicht.

Die Aufgabe wird gemäß einem Aspekt der Erfindung gelöst durch eine Luftkühlvorrichtung zur Luftkühlung eines Generators einer Windenergieanlage mittels Wind, umfassend eine Luftleitvorrichtung, die an der Kühleinheit angeordnet ist und sich ausgehend von der Kühleinheits-Außenfläche in einer Radialrichtung nach außen erstreckt und ausgebildet ist, in einem Betriebszustand der Windenergieanlage den Wind zur Luftkühlung in der Radialrichtung nach innen in Richtung der Kühleinheit zu leiten.

Die Erfindung beruht auf der Erkenntnis, dass sich der Wind, der die Windenergieanlage an- und umströmt, durch eine Luftleitvorrichtung in Richtung der Kühleinheit eines Generators leiten lässt. Die Luftleitvorrichtung hat den Effekt, den Wind zu beschleunigen, der somit mit einer höheren Geschwindigkeit an der Kühleinheit entlang strömt und eine bessere Kühlwirkung erzielt. Ferner hat die Luftleitvorrichtung insbesondere den Effekt, dass der Wind in eine Radialrichtung abgelenkt wird, die den Wind in ein Inneres der Kühleinheit leitet. Hierdurch lässt sich ein Generator mit einer optimalen Betriebstemperatur, jedenfalls aber näher an der optimalen Betriebstemperatur betreiben. Insbesondere lässt sich durch die Luftleitvorrichtung die Kühleinheit, d.h. der Generator, gleichmäßig kühlen. Dies führt insbesondere in Axialrichtung und Umfangsrichtung zu einem geringen Temperaturgefällte, was wiederum den Wirkungsgrad eines Generators erhöht. Ferner hat eine solch passives Kühlen den Vorteil, dass der Energieeinsatz für aktives Kühlen minimiert oder gar vollständig vermieden wird, was wiederum Kosten einspart.

Im Betriebszustand erstreckt sich die Windenergieanlage ausgehend von einem Fundament mit einem Turm bis zu einer Gondel, an welcher der aerodynamische Rotor mit den Rotorblättern angeordnet ist. Die Windenergieanlage, bzw. der Turm, erstrecken sich im Betriebszustand in einer im Wesentlichen vertikalen Richtung. Insofern bildet das Fundament ein unteres Ende der Windenergieanlage und die Gondel mit dem aerodynamischen Rotor ein oberes Ende. Innerhalb der Gondel ist der Generator angeordnet, welcher mit dem aerodynamischen Rotor gekoppelt ist.

Die Gondel kann im Betriebszustand der Windenergieanlage um eine Gondelachse drehbar gelagert sein. Die Gondelachse ist in der Regel im Wesentlichen vertikal ausgerichtet. Aufgrund der drehbaren Lagerung der Gondel um die Gondelachse lässt sich der aerodynamische Rotor der Windenergieanlage in Abhängigkeit der Windrichtung ausrichten. Der in der Gondel angeordnete Generator weist einen Stator mit einer Drehachse auf, um welche ein Rotor des Generators relativ zum Stator des Generators drehbar gelagert ist, um elektrische Energie aus kinetischer Energie zu erzeugen. In einer bevorzugten Ausführungsform ist der Generator als hochpoliger, insbesondere fremderregter, Synchrongenerator ausgebildet. Im Betriebszustand der Windenergieanlage ist die Drehachse vorzugsweise im Wesentlichen orthogonal zu der Gondelachse ausgerichtet. Insbesondere ist die Drehachse gegenüber der Gondelachse leicht geneigt ausgerichtet.

In dem Betriebszustand der Windenergieanlage ist die Kühleinheit vorzugsweise an dem Generator angeordnet. Insbesondere ist die Kühleinheit in dem Betriebszustand der Windenergieanlage an einer Außenfläche des Generators angeordnet. Ferner kann bevorzugt sein, dass die Kühleinheit in dem Betriebszustand der Windenergieanlage an der Gondel befestigt ist. Es ist jedenfalls bevorzugt, dass die Kühleinheit in dem Betriebszustand der Windenergieanlage mit dem Generator thermisch gekoppelt ist.

Im vorliegenden Text beziehen sich Positions- und Lageangaben, wie beispielsweise "oben" und "unten" oder "außen" und "innen" oder "radial", "axial" oder "umfang", sofern nicht anders ausgeführt auf den Betriebszustand einer Windenergieanlage, insbesondere auf die Drehachse des Generators. Insbesondere ist zu verstehen, dass eine Axialrichtung im Wesentlichen einer Ausrichtung bzw. Orientierung der Drehachse des Generators entspricht.

Beim Transport und/oder bei Wartungs- und/oder Instandhaltungsarbeiten an der Windenergieanlage und/oder dem Generator und/oder der Luftkühlvorrichtung und/oder Turm kann die Ausrichtung der Achsen, insbesondere zueinander, von der Ausrichtung der Achsen im Betriebszustand der Windenergieanlage abweichen.

Die Kühleinheit erstreckt sich in der Axialrichtung mit einer Kühleinheits-Länge zwischen einem ersten und zweiten Ende. Die Axialrichtung entspricht vorzugsweise einer Orientierung der Drehachse des Generators. In Umfangsrichtung, orthogonal zu der Axialrichtung, erstreckt sich die Kühleinheit insbesondere mit einer Kühleinheits-Breite zwischen einer ersten und zweiten Seite. Orthogonal zu der Axialrichtung und Umfangsrichtung erstreckt sich die Kühleinheit zwischen einer Kühleinheits-Innenfläche und der Kühleinheits-Außenfläche mit einer Kühleinheits-Höhe.

Vorzugsweise ist die Kühleinheits-Höhe kleiner als die Kühleinheits-Breite. Ferner ist bevorzugt, dass die Kühleinheits-Breite kleiner ist als die Kühleinheits-Länge. Vorzugsweise ist die Kühleinheit als teilringförmiges Kühlsegment ausgebildet. Es kann auch bevorzugt sein, dass die Kühleinheit ein oder mehrere teilringförmige Kühlsegmente umfasst.

Die Kühleinheits-Außenfläche ist vorzugsweise eben ausgebildet. Es kann auch bevorzugt sein, dass die Kühleinheits-Außenfläche profiliert ausgebildet ist. Insbesondere kann die Kühleinheits-Außenfläche Erhebungen oder Erstreckungen aufweisen, die sich in der Radialrichtung nach außen erstrecken, und/oder Ausnehmungen aufweisen, die sich in der Radialrichtung nach innen erstrecken. Insbesondere kann die Kühleinheits-Außenfläche ein rippenförmiges und/oder wellenförmiges und/oder rohrförmiges Profil und/oder kanalförmiges Profil aufweisen.

Im Betriebszustand ist die Kühleinheit an einer Außenseite des Generators angeordnet. Zur Kühlung des Generators ist dieser mit der Kühleinheit thermisch gekoppelt. In bevorzugter Weise bildet die Gondel die Kühleinheit aus oder nimmt diese an der Außenseite auf. Insbesondere ist vorgesehen, dass die Gondel eine oder mehrere Öffnungen aufweist, in denen die Kühleinheit angeordnet ist. Die eine oder mehreren Öffnungen können ringförmig oder teilringförmig ausgebildet sein.

Insbesondere kann eine Außenseite eines Stators und/oder eines Generators die Kühleinheit ausbilden oder sein.

Die Luftleitvorrichtung ist ausgebildet, in dem Betriebszustand der Windenergieanlage den Wind zur Luftkühlung in der Radialrichtung nach innen in Richtung der Kühleinheit zu leiten. Hierzu ist die Luftleitvorrichtung vorzugsweise gegenüber der Kühleinheits-Außenfläche geneigt angeordnet. Insbesondere ist die Luftleitvorrichtung derart angeordnet, dass diese einen oder mehrere Luftleitkanäle ausbilden, welche den Wind zur Luftkühlung in der Radialrichtung nach innen in Richtung der Kühleinheit leiten. Insbesondere sind die einen oder mehrere Luftleitkanäle im Betriebszustand der Windenergieanlage zur Windrichtung ausgerichtet, so dass der Wind, welcher die Windenergieanlage umströmt in den einen oder die mehreren Luftleitkanäle eintritt.

Es kann bevorzugt sein, dass die Luftleitvorrichtung, die sich ausgehend von der Kühleinheits-Außenfläche in der Radialrichtung nach außen erstreckt, zu der Kühleinheit beabstandet angeordnet ist. Insbesondere kann die Luftleitvorrichtung zu der Kühleinheit in der Radialrichtung beabstandet angeordnet sein. Insbesondere weist die Luftleitvorrichtung in der Radialrichtung einen Abstand auf, welcher mindestens 0%, 1%, 5%, 10%, 20%, 30%, 40%, 50%, 100%, 150% oder 200% der Kühleinheits-Länge entspricht und/oder maximal 0%, 1%, 5%, 10%, 20%, 30%, 40%, 50%, 100%, 150% oder 200% der Kühleinheits-Länge entspricht.

Alternativ kann es bevorzugt sein, dass die Kühleinheit die Luftleitvorrichtung integral ausbildet. Insbesondere ist auch bevorzugt, dass die Luftleitvorrichtung an der Kühleinheits-Außenfläche befestigt ist. Vorzugsweise ist die Luftleitvorrichtung kraft- und/oder stoff- und/oder formschlüssig mit der Kühleinheit verbunden. Insbesondere kann bevorzugt sein, dass die Luftleitvorrichtung mit der Kühleinheit verschweißt ist. Alternativ oder ergänzend kann bevorzugt sein, die Luftleitvorrichtung mit der Kühleinheit zu verschrauben.

Gemäß einer bevorzugten Ausführungsform der Luftkühlvorrichtung ist vorgesehen, dass die Luftleitvorrichtung eine erste Luftleiteinheit aufweist, die sich ausgehend von der Kühleinheits-Außenfläche spitzwinklig in der Radialrichtung nach außen erstreckt und/oder mit der Kühleinheit einen konvergierenden ersten Luftleitkanal bildet, der ausgebildet ist, in dem Betriebszustand der Windenergieanlage den Wind zur Luftkühlung in der Radialrichtung nach innen in Richtung der Kühleinheit zu leiten. Alternativ oder ergänzend ist bevorzugt vorgesehen, dass die Kühleinheit mehrere Kühlrippen mit einer Haupterstreckung in einer Axialrichtung aufweist, die in einer Umfangsrichtung orthogonal zu der Axialrichtung beabstandet angeordnet sind, und die Luftleitvorrichtung eine Haupterstreckung im Wesentlichen in der Umfangsrichtung aufweist.

Die erste Luftleiteinheit ist an der Kühleinheits-Außenfläche derart angeordnet, dass diese sich in einem spitzen Winkel bzw. spitzwinklig in der Radialrichtung nach außen erstreckt. Ein spitzer Winkel liegt zwischen mindesten einschließlich 0° und maximal einschließlich 90°. Insbesondere bewirkt die spitzwinklige Anordnung der ersten Luftleiteinheit, dass der in dem Betriebszustand der Windenergieanlage in Wesentlichen axial anströmende Wind in der Radialrichtung nach innen in Richtung zu der Kühleinheit umgeleitet wird.

Die erste Luftleiteinheit ist vorzugsweise teilringförmig oder ringförmig ausgebildet. Die erste Luftleiteinheit erstreckt sich in der Axialrichtung mit einer ersten Länge, in der Umfangsrichtung mit einer ersten Breite und in der Radialrichtung mit einer ersten Höhe. Vorzugsweise ist die erste Breite größer als die erste Länge und/oder die erste Höhe. Vorzugsweise weist die erste Luftleiteinheit ein lineares Profil auf. Ein lineares Profil weist insbesondere keine Wölbung auf. Es kann bevorzugt sein, dass die erste Luftleiteinheit ein geschwungenes Profil und/oder Profil mit Kanten aufweist. Vorzugsweise weist die Kante des Profils der ersten Luftleiteinheit eine Kantenlänge auf, die vorzugsweise mindestens 0 % und maximal 200 % der Kühleinheits-Länge entspricht, die sich zwischen dem ersten Ende und zweiten Ende erstreckt. Insbesondere kann das Profil der ersten Luftleiteinheit auch S-förmig ausgebildet sein. Insbesondere kann das Profil der ersten Luftleiteinheit konvexe und/oder konkave Profilabschnitte aufweisen.

Die spitzwinklige Anordnung der ersten Luftleiteinheit an der Kühleinheits-Außenfläche hat den Vorteil, den Wind, der die Windenergieanlage in deren Betriebszustand umströmt, besonders effizient in Richtung der radial innenliegenden Kühleinheit zu leiten. Insbesondere lässt sich Wind in ausreichender Menge und einer geeigneten Geschwindigkeit zur Kühlung an der Kühleinheit bereitstellen.

Die erste Luftleiteinheit ist an der Kühleinheit derart angeordnet, dass diese mit der Kühleinheits-Außenfläche einen ersten Luftleitkanal bildet, der konvergiert. Der Luftleitkanal weist eine Eintrittsöffnung auf, durch welche der Wind im Betriebszustand der Windenergieanlage eintritt, und eine Austrittsöffnung auf, durch welche der Wind im Betriebszustand der Windenergieanlage austritt. Bei einem konvergierenden Luftleitkanal nimmt der Querschnitt des Kanals in Strömungsrichtung ab. Bei einem konvergierenden Luftleitkanal kann die Eintrittsöffnung kleiner sein als die Austrittsöffnung. Insbesondere konvergiert der erste Luftleitkanal in der Axialrichtung. In dieser bevorzugten Ausführungsform ist der erste konvergierende Luftleitkanal ringförmig ausgebildet. Es kann aber auch bevorzugt sein, den ersten konvergierenden Luftleitkanal rohrförmig auszubilden. In der vorliegenden Ausführungsform weist der erste konvergierende Luftleitkanal einen in der Umfangsrichtung konstanten Querschnitt auf.

Ein solch konvergierender Luftleitkanal hat den Vorteil, dass der Wind in Richtung der Kühleinheit beschleunigt wird, was die Kühlleistung der Luftkühlvorrichtung nochmals verbessert.

Die Kühleinheit weist mehrere Kühlrippen auf, die in der Umfangsrichtung beabstandet zueinander angeordnet sind. Die in Umfangsrichtung jeweils benachbart angeordneten Kühlrippen definieren insbesondere einen Lüftungskanal, der eine Haupterstreckung in der Axialrichtung aufweist. In den Lüftungskanälen kann die durch das erste Luftleiteinheit zugeführte Luft strömen zur Kühlung des Generators bzw. der Kühleinheit.

Die mit Kühlrippen ausgebildete Kühleinheit hat den Effekt, dass die Fläche, über welche die Wärme des Generators abgeführt werden kann, vergrößert wird. Ferner haben die Kühlrippen den Effekt, dass diesen den zugeführten Wind in Axialrichtung über die Kühleinheitslänge für eine verbesserte Kühlungswirkung leiten. Insbesondere definieren die in Umfangsrichtung beabstandet angeordneten Kühlrippen Lüftungskanäle, welche den zugeführten Wind nochmals beschleunigen können und die Kühlleistung der Luftkühlvorrichtung weiter verbessern.

Nach einer weiteren bevorzugten Fortbildung umfasst die Luftleitvorrichtung eine zweite und/oder dritte Luftleiteinheit auf.

Die zweite Luftleiteinheit ist in der Axialrichtung gegenüber der ersten Luftleiteinheit versetzt angeordnet und erstreckt sich ausgehend von der Kühleinheits-Außenfläche spitzwinklig in der Radialrichtung nach außen und/oder bildet mit der der Kühleinheit einen konvergierenden zweiten Luftleitkanal, der ausgebildet ist, in dem Betriebszustand der Windenergieanlage den Wind zur Luftkühlung in der Radialrichtung nach innen in Richtung der Kühleinheit zu leiten.

Die dritte Luftleiteinheit ist in der Axialrichtung gegenüber der ersten und/oder zweiten Luftleiteinheit versetzt angeordnet und erstreckt sich ausgehend von der Kühleinheits-Außenfläche spitzwinklig in der Radialrichtung nach außen und/oder bildet mit der der Kühleinheit einen konvergierenden dritten Luftleitkanal, der ausgebildet ist, in dem Betriebszustand der Windenergieanlage den Wind zur Luftkühlung in der Radialrichtung nach innen in Richtung der Kühleinheit zu leiten.

Die zweite und/oder dritte Luftleiteinheit sind an der Kühleinheits-Außenfläche derart angeordnet, dass diese sich in einem spitzen Winkel bzw. spitzwinklig in der Radialrichtung nach außen erstrecken. Insbesondere bewirkt die spitzwinklige Anordnung der zweiten und/oder dritten Luftleiteinheit, dass der in dem Betriebszustand der Windenergieanlage in Wesentlichen axial anströmende Wind in der Radialrichtung nach innen in Richtung zu der Kühleinheit umgeleitet wird.

Die zweite und/oder dritte Luftleiteinheit sind vorzugsweise teilringförmig oder ringförmig ausgebildet. Die zweite und/oder dritte Luftleiteinheit erstrecken sich in der Axialrichtung mit einer zweiten und/oder dritten Länge, in der Umfangsrichtung mit einer zweiten und/oder dritten Breite und in der Radialrichtung mit einer zweiten und/oder dritten Höhe. Vorzugsweise ist die zweite bzw. dritte Breite größer als die zweite bzw. dritte Länge und/oder die zweite bzw. dritte Höhe. Vorzugsweise weist die zweite und/oder dritte Luftleiteinheit ein lineares Profil auf. Es kann bevorzugt sein, dass die zweite und/oder dritte Luftleiteinheit ein geschwungenes Profil und/oder Profil mit Kanten aufweist. Vorzugsweise weist die Kante des Profils der zweiten und/oder dritten Luftleiteinheit eine Kantenlänge auf, die vorzugsweise mindestens 0 % und maximal 200 % der Kühleinheits-Länge entspricht, die sich zwischen dem ersten Ende und zweiten Ende erstreckt. Insbesondere kann das Profil der zweiten und/oder dritten Luftleiteinheit auch S-förmig ausgebildet sein. Insbesondere kann das Profil der zweiten und/oder dritten Luftleiteinheit konvexe und/oder konkave Profilabschnitte aufweisen.

Die spitzwinklige Anordnung der zweiten und/oder dritten Luftleiteinheit an der Kühleinheits-Außenfläche hat den Vorteil, den Wind, der die Windenergieanlage in deren Betriebszustand umströmt, besonders effizient in Richtung der radial innenliegenden Kühleinheit zu leiten. Insbesondere lässt sich Wind in ausreichender Menge und einer geeigneten Geschwindigkeit zur Kühlung an der Kühleinheit bereitstellen.

Die zweite und/oder dritte Luftleiteinheit ist an der Kühleinheit derart angeordnet, dass diese mit der Kühleinheits-Außenfläche einen zweiten und/oder dritten Luftleitkanal bildet, der jeweils konvergiert. Der Luftleitkanal weist eine Eintrittsöffnung auf, durch welche der Wind im Betriebszustand der Windenergieanlage eintritt, und eine Austrittsöffnung auf, durch welche der Wind im Betriebszustand der Windenergieanlage austritt. Insbesondere konvergiert der zweite und/oder dritte Luftleitkanal in der Axialrichtung. In dieser bevorzugten Ausführungsform ist der zweite und/oder dritte konvergierende Luftleitkanal ringförmig ausgebildet. Es kann aber auch bevorzugt sein, den zweiten und/oder dritten konvergierenden Luftleitkanal rohrförmig auszubilden. In der vorliegenden Ausführungsform weist der zweite und/oder dritte konvergierende Luftleitkanal einen in der Umfangsrichtung konstanten Querschnitt auf.

Solch konvergierende Luftleitkanäle haben den Vorteil, dass der Wind in Richtung der Kühleinheit beschleunigt wird, was die Kühlleistung der Luftkühlvorrichtung nochmals verbessert.

Die erste Luftleiteinheit ist gegenüber der zweiten und/oder dritten Luftleiteinheit versetzt angeordnet. Vorzugsweise ist die dritte Luftleiteinheit zwischen der ersten und zweiten Luftleiteinheit angeordnet. Insbesondere ist die erste Luftleiteinheit gegenüber der zweiten und/oder dritten Luftleiteinheit mit einem Abstand von mindestens 0%, 10%, 20%, 30%, 40%, 50%, 100%, 200%, 300%, 400%, 500% oder 1000% der ersten Länge der ersten Luftleiteinheit beabstandet angeordnet. Ergänzend oder alternativ ist die erste Luftleiteinheit gegenüber der zweiten und/oder dritten Luftleiteinheit mit einem Abstand von maximal 0%, 10%, 20%, 30%, 40%, 50%, 100%, 200%, 300%, 400%, 500% oder 1000% der ersten Länge der ersten Luftleiteinheit beabstandet angeordnet.

Vorzugsweise ist die erste Luftleiteinheit beabstandet zu dem ersten Ende angeordnet. Es kann bevorzugt sein, dass die erste Luftleiteinheit an dem ersten Ende angeordnet ist. Vorzugsweise ist die erste Luftleiteinheit mit einem Abstand von mindestens 0%,10%, 20%, 30%, 40%, 50% oder 60% der Kühleinheits-Länge von dem ersten Ende der Kühleinheit beabstandet angeordnet. Ergänzend oder alternativ ist die erste Luftleiteinheit mit einem Abstand von maximal 0%,10%, 20%, 30%, 40%, 50% oder 60% der Kühleinheits-Länge von dem ersten Ende der Kühleinheit beabstandet angeordnet.

Ferner kann bevorzugt sein, dass die zweite Luftleiteinheit beabstandet zu dem zweiten Ende angeordnet ist.

Eine Luftleitvorrichtung aufweisend mehrere Luftleiteinheiten hat den Vorteil, dass die Luftleiteinheiten in Abhängigkeit des Anströmprofils des Windes an der Kühleinheit angeordnet werden können. Das Anströmprofil kann vom Typ der Windenergieanlage abhängen. Ferner lässt sich hierdurch die Menge an Wind erhöhen, welche der Kühleinheit zugeführt werden kann. Dies erhöht die Kühlleistung und ermöglicht einen Betrieb der Windenergieanlage mit einer optimalen Betriebstemperatur. Ferner hat eine solche Anordnung den Vorteil, dass die Kühleinheit und mithin der Generator in Umfangsrichtung und Axialrichtung gleichmäßig gekühlt werden. Insbesondere lässt sich durch die Anordnung ein Temperaturgefälle in Axialrichtung und/oder Umfangsrichtung an der Kühleinheit bzw. dem Generator minimieren.

Gemäß einer weiteren bevorzugten Fortbildung der Luftkühlvorrichtung ist vorgesehen, dass die erste und/oder zweite und/oder dritte Luftleiteinheit aus einem oder mehreren Teilringsegmenten ausgebildet sind.

Diese bevorzugte Ausführungsform hat den Vorteil, dass die Luftkühlvorrichtung besonders einfach und kostengünstig montiert werden kann. Insbesondere lassen sich trotz der bestehenden transportbedingten Größenbeschränkungen hierdurch auch Luftkühlvorrichtungen für Generatoren mit einem besonders großen Durchmesser bereitstellen und passiv kühlen.

Ferner ist nach einer bevorzugten Ausführungsform vorgesehen, dass sich ausgehend von der Kühleinheits-Außenfläche die erste Luftleiteinheit mit einem ersten spitzen Winkel erstreckt, die zweite Luftleiteinheit mit einem zweiten spitzen Winkel erstreckt und die dritte Luftleiteinheit mit einem dritten spitzen Winkel erstreckt, wobei der erste und/oder zweite und/oder dritte spitze Winkel gleich sind, und/oder der erste spitze Winkel kleiner ist als der zweite und/oder dritte spitze Winkel, und/oder der erste spitze Winkel größer ist als der zweite und/oder dritte spitze Winkel, und/oder sich ausgehend von der Kühleinheits-Außenfläche die erste Luftleiteinheit in der Radialrichtung mit einer ersten Höhe erstreckt, die zweite Luftleiteinheit in der Radialrichtung mit einer zweiten Höhe erstreckt und die dritte Luftleiteinheit in der Radialrichtung mit einer dritten Höhe erstreckt, wobei der erste und/oder zweite und/oder dritte Höhe gleich sind und/oder die erste Höhe kleiner ist als die zweite und/oder dritte Höhe, und/odersich ausgehend von der Kühleinheits-Außenfläche die erste Luftleiteinheit in der Axialrichtung mit einer ersten Länge erstreckt, die zweite Luftleiteinheit in der Axialrichtung mit einer zweiten Länge er-streckt und die dritte Luftleiteinheit in der Axialrichtung mit einer dritten Länge erstreckt, wobei die erste und/oder zweite und/oder dritte Länge gleich sind, und/oder die erste Länge kleiner ist als die zweite und/oder dritte Länge, und/oder die erste Länge größer ist als die zweite und/oder dritte Länge.

Der erste und/oder zweite und/oder dritte spitze Winkel entsprechen mindestens 0°, 10°, 15°, 20°, 25°, 30°, 35°, 40°, 45°, 50°, 60°, 70°, 80°, 90° oder mehr und maximal 0°, 10°, 15°, 20°, 25°, 30°, 35°, 40°, 45°, 50°, 60°, 70°, 80° oder 90°. Vorzugsweise ist der erste spitze Winkel kleiner als der zweite und/oder dritte spitze Winkel. Ferner ist bevorzugt, dass der dritte spitze Winkel kleiner ist als der zweite spitze Winkel. Insbesondere ist bevorzugt, dass der erste spitze Winkel 20° oder 30° beträgt. Ferner ist bevorzugt, dass der zweite und/oder dritte spitze Winkel 30° oder 35° beträgt. Ferner kann bevorzugt sein, dass der erste spitze Winkel größer ist als der zweite und/oder dritte spitze Winkel. Weiterhin kann auch bevorzugt sein, dass der dritte spitze Winkel größer ist als der zweite spitze Winkel. Ferner kann bevorzugt sein, dass erste und/oder zweite und/oder dritte spitze Winkel gleich sind.

Insbesondere ist zu verstehen, dass die erste Luftleiteinheit und/oder die zweite Luftleiteinheit und/oder die dritte Luftleiteinheit sich ausgehend von der Kühleinheits-Außenfläche in einem spitzen Winkel erstreckt, so dass Wind zwischen die Kühleinheits-Außenfläche und die erste Luftleiteinheit und/oder die zweite Luftleiteinheit und/oder die dritte Luftleiteinheit geleitet wird. Insbesondere öffnet sich die erste Luftleiteinheit und/oder die zweite Luftleiteinheit und/oder die dritte Luftleiteinheit ausgehend von der Kühleinheits-Außenfläche in einem spitzen Winkel in Richtung des anströmenden Windes. Es ist insbesondere zu verstehen, dass zwischen der Kühleinheits-Außenfläche und der ersten Luftleiteinheit und/oder der zweiten Luftleiteinheit und/oder der dritten Luftleiteinheit ein erster und/oder zweiter und/oder dritter stumpfer Winkel ausgebildet wird, der in dem Betriebszustand von der Anströmrichtung des Windes abgewandt ist. Insbesondere bilden der erste spitze Winkel und der erste stumpfe Winkel zusammen 180° und/oder bilden der zweite spitze Winkel und der zweite stumpfe Winkel zusammen 180° und/oder bilden der dritte spitze Winkel und der dritte stumpfe Winkel zusammen 180°. Der erste und/oder der zweite und/oder der dritte stumpfe Winkel sind größer als 90° und kleiner als 180°.

Die erste und/oder zweite und/oder dritte Höhe entsprechen mindestens 0mm, 50mm, 100mm, 150mm, 200mm, 300mm oder mehr und maximal 0mm, 50mm, 100mm, 150mm, 200mm oder 300mm. Vorzugsweise ist die erste Höhe kleiner als die zweite und/oder dritte Höhe. Ferner ist bevorzugt, dass die dritte Höhe kleiner ist als die zweite Höhe.

Die erste und/oder zweite und/oder dritte Länge entsprechen mindestens 0mm, 50mm, 100mm, 150mm, 200mm, 300mm oder mehr und maximal 0mm, 50mm, 100mm, 150mm, 200mm oder 300mm. Vorzugsweise ist die erste Länge kleiner als die zweite und/oder dritte Länge. Ferner ist bevorzugt, dass die dritte Länge kleiner ist als die zweite Länge. Insbesondere ist bevorzugt, dass die erste Länge 150mm beträgt. Ferner ist bevorzugt, dass die zweite und/oder dritte Länge 200mm beträgt. Ferner ist bevorzugt, dass die erste und/oder zweite und/oder dritte Länge mindestens 1%, 10%, 20%, 30%, 40% oder 50% der Kühleinheits-Länge entsprechen und/oder maximal 1%, 10%, 20%, 30%, 40% oder 50% der Kühleinheits-Länge entsprechen.

Nach einer weiteren bevorzugten Fortbildung der Luftkühlvorrichtung ist vorgesehen, dass sich die Kühleinheit in der Axialrichtung zwischen einem ersten Ende, welche in dem Betriebszustand der Windenergieanlage bezogen auf die Windrichtung des Windes stromaufwärts angeordnet ist, und einem zweiten Ende, welche in dem Betriebszustand der Windenergieanlage bezogen auf die Wind-richtung des Windes stromaufwärts des ersten Endes angeordnet ist, erstreckt, wobei die erste Luftleiteinheit bezogen auf die Erstreckung der Kühleinheit ausgehend von dem ersten Ende in der Axialrichtung einem ersten Drittel und/oder einer ersten Hälfte der Kühleinheit angeordnet ist, und/oder die zweite Luftleiteinheit bezogen auf die Erstreckung der Kühleinheit ausgehend von dem ersten Ende in der Axialrichtung einem zweiten oder dritten Drittel und/oder einer zweiten Hälfte der Kühleinheit angeordnet ist, und/oder die dritte Luftleiteinheit bezogen auf die Erstreckung der Kühleinheit ausgehend von dem ersten Ende in der Axialrichtung einem ersten, zweiten oder dritten Drittel und/oder einer ersten oder zweiten Hälfte der Kühleinheit angeordnet ist.

Diese Ausführungsform hat den Vorteil, dass ein Temperaturgefälle der Kühleinheit bzw. des zu kühlenden Generators in der Axialrichtung und Umfangsrichtung minimieren lässt. Dies führt in besonders bevorzugter Weise zu einem verbesserten Wirkungsgrad des Generators.

In einer weiteren bevorzugten Ausführungsform der Luftkühlvorrichtung ist vorgesehen, dass die erste und/oder zweite und/oder dritte Luftleiteinheit jeweils aufweisen ein Basiselement, welches zur Anordnung der jeweiligen Luftleiteinheit an der Kühleinheit ausgebildet ist, und/oder ein Luftleitelement, welches sich ausgehend von dem Basiselement spitzwinklig erstreckt und mit der Kühleinheit einen konvergierenden Luftleitkanal bildet, der ausgebildet ist, in dem Betriebszustand der Windenergieanlage den Wind zur Luftkühlung in Richtung der Kühleinheit zu leiten, und/oder einen Flansch, welcher sich ausgehend von dem Basiselement winklig erstreckt und zur Verbindung von in Umfangsrichtung benachbart angeordneten Luftleiteinheiten ausgebildet ist.

Eine solche bevorzugte Ausführungsform ermöglicht eine besonders leichte und kostengünstige Montage der Luftleitvorrichtung an der Kühleinheit. Insbesondere hat diese bevorzugte Ausführungsform den Vorteil, dass bestehend und bereits im Betrieb stehende Generatoren mit einer solchen Luftkühlvorrichtung einfach und kostengünstig nachgerüstet werden können. Ferner hat dies die Wirkung, dass der Generator sowohl in der Fabrik als auch am Aufstellort der Windenergieanlage montiert werden kann.

Nach einer weiteren bevorzugten Ausführungsform weist die Luftkühlvorrichtung eine Dämpfungseinheit, welche zwischen der Luftleitvorrichtung und der Kühleinheit angeordnet ist.

Ferner ist gemäß einer bevorzugten Fortbildung vorgesehen, dass sich die Luftleitvorrichtung im Betriebszustand in der Axialrichtung zwischen einer Luftleitanströmkante und einer Lufteinleitkante erstreckt, wobei die Luftleitanströmkante gegenüber der Lufteinleitkante bezogen auf den Wind stromaufwärts angeordnet ist. An der Luftleitanströmkante tritt Wind in Strömungsrichtung erstmals mit der Luftleitvorrichtung im Betriebszustand in Kontakt. Die Luftleitanströmkante weist vorzugsweise eine Haupterstreckungsrichtung in Umfangsrichtung auf. An der Lufteinleitkante wird in bevorzugter Weise der von der Luftleitvorrichtung im Betriebszustand geführte Wind an der Kühleinheits-Außenfläche in die Kühleinheit eingeleitet. Insofern ist die Lufteinleitkante vorzugsweise stromabwärts von der Luftleitanströmkante angeordnet. Insbesondere steht die ist die Luftleitvorrichtung an der Lufteinleitkante letztmalig mit dem angeströmten Wind im Kontakt, bevor dieser zur Kühlung in die Kühleinheit geleitet wird.

Weiterhin ist nach einer bevorzugten Ausführungsform der Luftkühlvorrichtung vorgesehen, dass die Kühleinheits-Außenfläche eine Kühleinheits-Anströmkante aufweist und die Luftleitvorrichtung derart an der Kühleinheit angeordnet ist, dass die Kühleinheits-Anströmkante in der Axialrichtung zwischen der Luftleitanströmkante und der Lufteinleitkante angeordnet ist. Vorzugsweise ist die Kühleinheits-Anströmkante das erste Ende der Kühleinheit. Insbesondere ist also die Kühleinheits-Anströmkante in Strömungsrichtung des Windes stromabwärts der Luftleitanströmkante und stromaufwärts der Lufteinleitkante angeordnet. Durch diese Anordnung lässt sich die Kühlleistung in bevorzugter Weise nochmals erhöhen.

Gemäß einer weiteren bevorzugten Fortbildung erstreckt sich die Kühleinheits-Außenfläche ausgehend von der Kühleinheits-Anströmkante in der Axialrichtung mit einer Kühleinheits-Kühllänge und der Abstand zwischen der Luftleitanströmkante und der Kühleinheits-Anströmkante beträgt mindestens 0 % der Kühleinheits-Kühllänge und maximal 100 % der Kühleinheits-Kühllänge. Insbesondere erstreckt sich die Kühleinheit zwischen dem ersten Ende und dem zweiten Ende mit der Kühleinheits-Kühllänge. Dies hat insbesondere den Vorteil, dass der Wind zur Kühlung des Generators besser zu der Kühleinheits-Außenfläche der Kühleinheit geführt werden kann. Insbesondere lässt sich hierdurch die Kühlleistung durch diese Anordnung in vorteilhafter Weise erhöhen.

Nach einer ferner bevorzugten Fortbildung der Luftkühlvorrichtung weist die Luftleitvorrichtung eine vierte Luftleiteinheit auf, die sich ausgehend von der Kühleinheits-Außenfläche mit einem stumpfen Winkel in der Radialrichtung nach außen erstreckt. Der stumpfe Winkel ist insbesondere ein Winkel größer als 90° und kleiner als 180°. Der stumpfe Winkel ist insbesondere der Winkel zwischen der Kühleinheits-Außenfläche und der vierten Luftleiteinheit, der sich in Strömungsrichtung des Windes öffnet. Es ist insbesondere zu verstehen, dass zwischen der vierten Luftleiteinheit und der Kühleinheits-Außenfläche ein vierter spitzer Winkel ausgebildet wird, der in dem Betriebszustand von der Anströmrichtung des Windes abgewandt ist. Der vierte spitze Winkel ist vorzugsweise größer als 0° und kleiner als 90°. Insbesondere bilden der vierte spitze Winkel und der vierte stumpfe Winkel zusammen 180°.

Dies reduziert in vorteilhafter Weise Vibrationen. Dadurch lässt sich die Schallemission minimieren. Ferner werden durch die minimierten Vibrationen die Luftkühlvorrichtung geschont, was wiederum die Lebensdauer der Luftkühlvorrichtung erhöht.

Die Aufgabe wird gemäß einem weiteren Aspekt der Erfindung gelöst durch einen Generator einer Windenergieanlage umfassend eine zuvor beschriebene Luftkühlvorrichtung.

Die Aufgabe wird gemäß einem Aspekt der Erfindung gelöst durch eine Luftführungsvorrichtung umfassend eine oder mehrere Luftführungseinheiten an der Rotationseinheits-Außenfläche der Rotationseinheit zwischen den Anschlüssen oder den Durchgangsöffnungen angeordnet sind, die sich ausgehend von der Rotationseinheits-Außenfläche in einer Radialrichtung nach außen erstreckt und ausgebildet ist, den Wind zur Luftkühlung des Generators zu der Kühleinheit zu leiten.

Die Rotationseinheit ist insbesondere ein Spinner, eine Nabe oder ein sonstiges geeignetes Element des aerodynamischen Rotors einer Windenergieanlage.

Die eine oder mehrere Luftführungseinheiten sind insbesondere schaufelförmig ausgebildet. Es kann bevorzugt sein, dass die eine oder mehrere Luftführungseinheiten ein Profil mit einer Wölbung aufweisen. Insbesondere weisen die eine oder mehrere Luftführungseinheiten ein lineares und/oder konvexes und/oder konkaves und/oder s-förmiges Profil auf. Insbesondere können die eine oder mehrere Luftführungseinheiten ein Profil mit einer Kante und/oder einen Sprung aufweisen.

Ferner ist bevorzugt, dass die Luftführungsvorrichtung eine oder mehrere Abdeckungen aufweist. Insbesondere kann in bevorzugter Weise vorgesehen sein, dass die eine oder mehreren Luftführungseinheiten eine Abdeckung zur Führung des Windes aufweisen. Insbesondere ist die eine oder sind die mehreren Abdeckungen an einer in der Radialrichtung außenliegenden Seite der einen oder der mehreren Luftführungseinheiten angeordnet. Insbesondere ist die eine oder sind die mehreren Abdeckungen derart an der Rotationseinheit angeordnet, dass sich die eine oder die mehreren Luftführungseinheiten in der Radialrichtung zwischen der Rotationseinheits-Außenfläche der Rotationseinheit und der Abdeckung erstrecken. Es ist zu verstehen, dass die eine oder mehrere Abdeckungen mit der einen oder den mehreren Luftführungseinheiten und der Rotationseinheits-Außenfläche einen oder mehrere Luftführungskanäle ausbilden. Die Luftführungskanäle sind besonders bevorzugter Weise geeignet, den Wind, welcher die Windenergieanlage in dessen Betriebszustand an- und umströmt, in Richtung des zu kühlenden Generators, insbesondere in Richtung einer an dem Generator ausgebildeten oder angeordneten Kühleinheit, für eine verbesserte Kühlleistung zu leiten.

Die Rotationseinheit erstreckt sich in der Axialrichtung mit einer Rotationseinheits-Länge. Die eine oder mehrere Luftführungseinheiten erstrecken sich in der Axialrichtung mit einer Luftführungseinheits-Länge. Vorzugsweise erstrecken sich die eine oder mehreren Luftführungseinheiten mit Luftführungseinheits-Länge, welche mindestens 10%, 20%, 30%, 40%, 50%, 60%, 70%, 80%, 90%, 100%, 110%, 120%, 130%, 140%, 150% oder mehr der Rotationseinheits-Länge entspricht und/oder maximal 10%, 20%, 30%, 40%, 50%, 60%, 70%, 80%, 90%, 100%, 110%, 120%, 130%, 140%, 150% oder weniger der der Rotationseinheits-Länge entspricht. Ferner erstrecken sich die eine oder mehrere Luftführungseinheiten in der Radialrichtung mit einer Luftführungseinheits-Höhe.

Vorzugsweise erstrecken sich die eine oder mehreren Luftführungseinheiten mit Luftführungseinheits-Höhe, welche mindestens 1%, 10%, 20%, 30%, 40%, 50%, 60%, 70%, 80%, 90%, 100%, 110%, 120%, 130%, 140%, 150%, 1000% oder mehr der Luftführungseinheits-Länge entspricht und/oder maximal 1%, 10%, 20%, 30%, 40%, 50%, 60%, 70%, 80%, 90%, 100%, 110%, 120%, 130%, 140%, 150%, 1000% oder weniger der der Luftführungseinheits-Länge entspricht.

Ferner ist bevorzugt, dass sich die eine oder mehreren Luftführungseinheiten ausgehend von der Rotationseinheits-Außenfläche winklig in der Radialrichtung nach außen erstrecken. Insbesondere ist vorgesehen, dass sich die eine oder mehreren Luftführungseinheiten ausgehend von der Rotationseinheits-Außenfläche mit einem Neigungswinkel in der Radialrichtung nach außen erstrecken. Vorzugsweise beträgt der Neigungswinkel mindestens -85°, -80°, -70°, -60°, -50°, -40°, -30°, -20°, -10°, 0°, +10°, +20°, +30°, +40°, +50°, +60°, +70°, +80°, +85° und/oder maximal -85°, -80°, -70°, -60°, -50°, -40°, -30°, -20°, -10°, 0°, +10°, +20°, +30°, +40°, +50°, +60°, +70°, +80° oder +85°.

Ferner ist bevorzugt, dass die eine oder mehreren Luftführungseinheiten gegenüber der Axialrichtung, insbesondere gegenüber der Drehachse, mit einem Anströmwinkel angeordnet sind. Der Anströmwinkel beschreibt einen Winkel der einen oder der mehreren Luftführungseinheiten in Bezug auf die Drehachse um eine Achse, die sich orthogonal zu der Rotationseinheits-Außenfläche. Vorzugsweise beträgt der Anströmwinkel mindestens -85°, -80°, -70°, -60°, -50°, -40°, -30°, -20°, -10°, 0°, +10°, +20°, +30°, +40°, +50°, +60°, +70°, +80°, +85° und/oder maximal -85°, -80°, -70°, -60°, -50°, -40°, -30°, -20°, -10°, 0°, +10°, +20°, +30°, +40°, +50°, +60°, +70°, +80°, +85°.

Nach einer bevorzugten Ausführungsform der Luftführungsvorrichtung ist vorgesehen, dass sich die Rotationseinheit in einer Axialrichtung zwischen einem ersten Ende, welche in dem Betriebszustand der Windenergieanlage bezogen auf die Windrichtung des Windes stromaufwärts angeordnet ist, und einem zweiten Ende, welche in dem Betriebszustand der Windenergieanlage bezogen auf die Windrichtung des Windes stromabwärts des ersten Endes angeordnet ist, erstreckt, wobei die eine oder die mehreren Luftführungseinheiten derart an der Rotationseinheit angeordnet sind, dass sich diese zwischen dem ersten und zweiten Ende der Rotationseinheit erstrecken, und/oder in der Axialrichtung über das zweite Ende hinaus erstrecken. Ergänzend und/oder alternativ ist vorgesehen, dass sich die eine oder mehreren Luftführungseinheiten ausgehend von der Rotationseinheits-Außenfläche mit einem Neigungswinkel in der Radialrichtung nach außen erstrecken.

Die Aufgabe wird gemäß einem weiteren Aspekt der Erfindung gelöst durch eine Windenergieanlage aufweisend einen zuvor beschriebenen Generator und/oder eine zuvor beschriebene Luftführungsvorrichtung.

Die Aufgabe wird gemäß einem weiteren Aspekt der Erfindung gelöst durch ein Verfahren zur Herstellung eines Generators einer Windenergieanlage mit einer Luftkühlvorrichtung, umfassend die Schritte: Bereitstellen einer Kühleinheit eines Generators und einer Luftleitvorrichtung, die eine als Teilringsegment ausgebildete erste und/oder zweite und/oder dritte stationäre Luftleiteinheit aufweist; Anordnen der Luftleitvorrichtung an einer Kühleinheits-Außenfläche, wobei vorzugsweise die Kühleinheit mehrere Kühlrippen mit einer Haupterstreckung in einer Axialrichtung aufweist, die in einer Umfangsrichtung orthogonal zu der Axialrichtung beabstandet angeordnet sind, und die Luftleitvorrichtung vorzugsweise eine Haupterstreckung im Wesentlichen in einer Umfangsrichtung, orthogonal zu der Axialrichtung aufweist; und Befestigen der Luftleitvorrichtung an der Kühleinheits-Außenfläche.

Gemäß einer bevorzugten Ausführungsform umfasst der Schritt des Befestigens der Luftleitvorrichtung an der Kühleinheits-Außenfläche: ein stoffschlüssiges Verbinden, insbesondere Schweißverbinden, und/oder kraftschlüssiges Verbinden, insbesondere Schraubverbinden, und/oder ein formschlüssiges Verbinden der Luftleitvorrichtung mit der Kühleinheit und/oder stoffschlüssiges Verbinden, insbesondere Schweißverbinden, und/oder kraftschlüssiges Verbinden, insbesondere Schraubverbinden, und/oder ein formschlüssiges Verbinden, von benachbart angeordneten Teilringsegmenten einer ersten Luftleiteinheit, so dass diese eine als Ring ausgebildete erste Luftleit-einheit ausbilden, und/oder von benachbart angeordneten Teilringsegmenten einer zweiten Luftleiteinheit, so dass diese eine als Ring ausgebildete zweite Luftleiteinheit ausbilden, und/oder von benachbart angeordneten Teilringsegmenten einer dritten Luftleit-einheit, so dass diese eine als Ring ausgebildete dritte Luftleit-einheit ausbilden, und/oder vorzugsweise Anordnen einer Dämpfungseinheit zwischen der Luftleitvorrichtung und der Kühleinheit.

Die Aufgabe wird gemäß einem weiteren Aspekt der Erfindung gelöst durch ein Verfahren zur Herstellung einer Windenergieanlage, umfassend die Schritte: Bereitstellen einer Rotationseinheit eines aerodynamischen Rotors der Windenergieanlage mit einer Rotationseinheits-Außenfläche, entlang welcher der Wind im Betrieb der Windenergieanlage strömt, Anordnen einer oder mehrerer Luftführungseinheiten an der Rotationseinheits-Außenfläche der Rotationseinheit zwischen den Anschlüssen oder den Durchgangsöffnungen, und/oder Befestigen der Rotationseinheit an einem Generator, insbesondere einem zuvor beschriebenen Generator oder einem gemäß einem zuvor beschriebenen Verfahren hergestellten Generator.

Zu den Vorteilen, Ausführungsvarianten und Ausführungsdetails dieser weiteren Aspekte der Erfindungen und ihrer jeweiligen Fortbildungen wird auch auf die übrige Beschreibung zu den entsprechenden Vorteilen, Ausführungsvarianten und Ausführungsdetails der jeweils übrigen Aspekte verwiesen.

Bevorzugte Ausführungsformen der Erfindung werden beispielhaft anhand der beiliegenden Figuren beschrieben. Es zeigen:
- Figur 1:: eine schematische Darstellung einer Windenergieanlage;
- Figur 2:: eine schematische Seitenansicht einer Windenergieanlage mit einem Generator mit einer ersten beispielhaften Ausführungsform einer Luftkühlvorrichtung;
- Figur 3:: eine schematische Seitenansicht einer Windenergieanlage mit einem Generator mit einer zweiten beispielhaften Ausführungsform einer Luftkühlvorrichtung;
- Figur 4a,b:: eine schematische dreidimensionale, detaillierte Ansicht einer Kühleinheit mit einer ersten und zweiten beispielhaften Ausführungsform einer Luftkühlvorrichtung mit einer ersten Luftleiteinheit;
- Figur 5:: eine schematische Seitenansicht einer Windenergieanlage mit einem Generator mit einer dritten beispielhaften Ausführungsform einer Luftkühlvorrichtung;
- Figur 6:: eine schematische Seitenansicht einer Windenergieanlage mit einem Generator mit einer vierten beispielhaften Ausführungsform einer Luftkühlvorrichtung;
- Figur 7a,b,c:: eine schematische dreidimensionale Ansicht einer Kühleinheit mit einer ersten, zweiten und dritten beispielhaften Ausführungsform einer Luftkühlvorrichtung mit einer ersten und zweiten Luftleiteinheit;
- Figur 8:: eine schematische Seitenansicht einer Windenergieanlage mit einem Generator basierend auf Figur 2 mit einer ersten beispielhaften Ausführungsform einer Luftführungsvorrichtung;
- Figur 9:: eine schematische Seitenansicht einer Windenergieanlage mit einem Generator basierend auf Figur 2 mit einer zweiten beispielhaften Ausführungsform einer Luftführungsvorrichtung;
- Figur 10a,b:: eine schematische Front- und Seitenansicht einer beispielhaften Ausführungsform einer Luftleiteinheit;
- Figur 11:: ein schematisches Ablaufdiagramm eines beispielhaften Verfahrens zur Herstellung eines Generators einer Windenergieanlage mit einer Luftkühlvorrichtung;
- Figur 12:: ein schematisches Ablaufdiagramm eines beispielhaften Verfahrens zur Herstellung einer Windenergieanlage;
- Figur 13:: eine schematische Seitenansicht eines Generators mit einer weiteren beispielhaften Ausführungsform einer Luftkühlvorrichtung; und
- Figur 14:: eine schematische Seitenansicht eines Generators mit einer weiteren beispielhaften Ausführungsform einer Luftkühlvorrichtung.

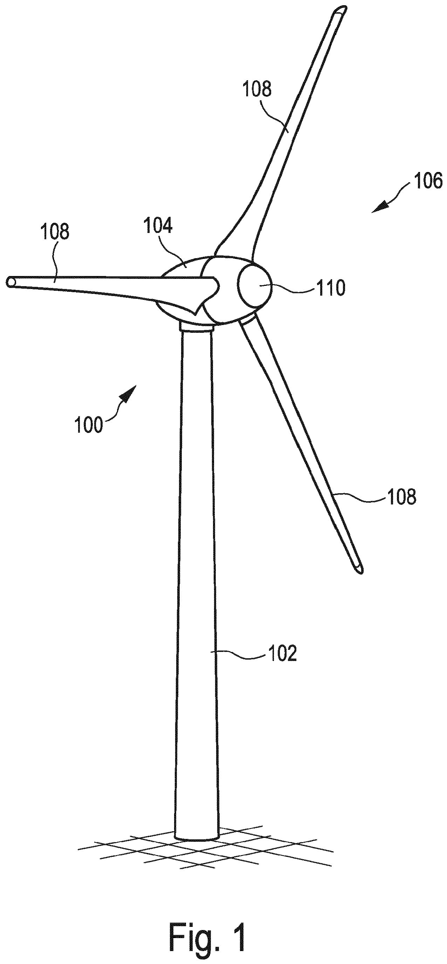

Fig. 1 zeigt eine schematische Darstellung einer Windenergieanlage 100 gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie.

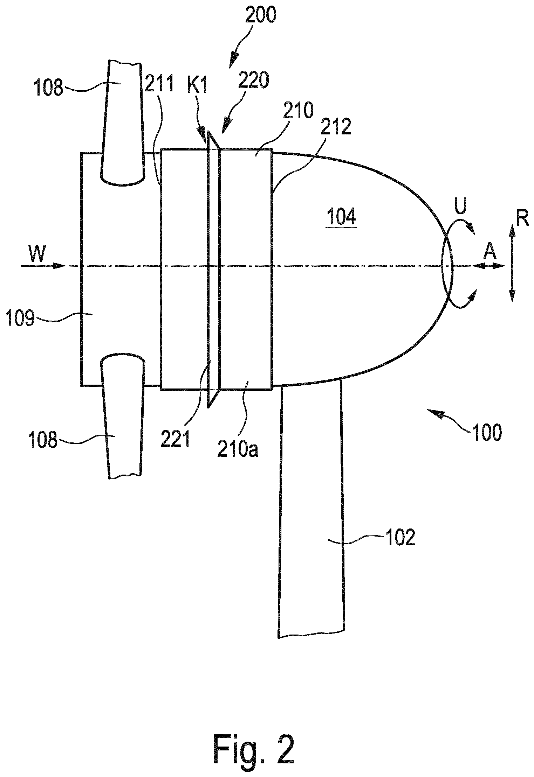

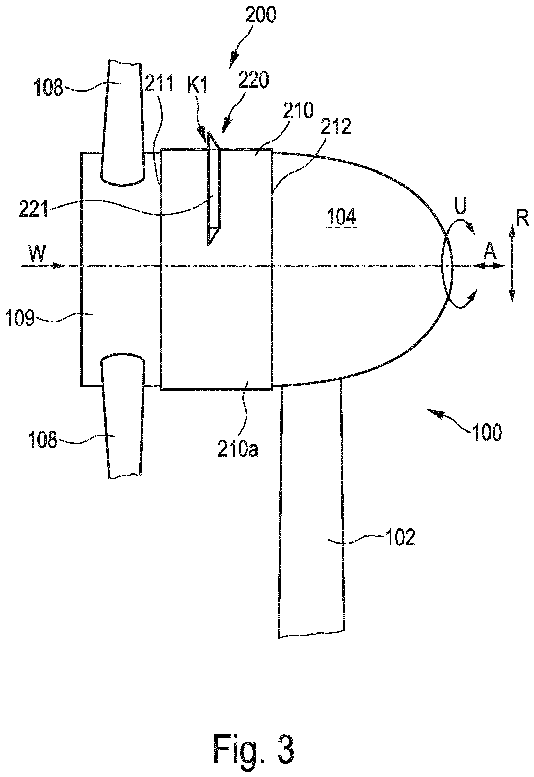

Fig. 2 und 3 zeigen jeweils eine schematische Seitenansicht einer Windenergieanlage 100 mit einem Generator mit einer ersten und zweiten bevorzugten Ausführungsform einer Luftkühlvorrichtung 200. Die in den Fig. 2 und 3 dargestellte Windenergieanlage 100 basiert auf der in Fig. 1 beschriebenen Windenergieanlage 100. An der Gondel 104 ist eine Kühleinheit 210 des Generators angeordnet, welcher im Betriebszustand der Windenergieanlage 100 vom Wind W zur passiven Kühlung des Generators angeströmt wird. Dazu ist die Kühleinheit 210 ringförmig ausgebildet und weist eine radial außenliegende Kühleinheits-Außenfläche 210a auf, an welcher der Wind W zur Kühlung des Generators entlang strömt. Entsprechend weist die Gondel eine ringförmige Öffnung zur Aufnahme der Kühleinheit auf.

An der Kühleinheit 210, d.h. vorliegend an der Kühleinheits-Außenfläche 210a, ist eine Luftkühlvorrichtung 200 angeordnet. Die Luftkühlvorrichtung 200 weist eine erste Luftleiteinheit 221 auf, die sich ausgehend von der Kühleinheits-Außenfläche 210a spitzwinklig in der Radialrichtung R nach außen erstreckt. Dadurch bildet die erste Luftleiteinheit 221 mit der Kühleinheits-Außenfläche 210a einen ersten Luftleitkanal K1. Der Querschnitt des ersten Luftleitkanal K1 nimmt in Windrichtung entlang der Axialrichtung A ab. Insofern ist der ersten Luftleitkanal K1 ein konvergierender Luftleitkanal, der in Windrichtung, d.h. stromabwärts, konvergiert. Der erste Luftleitkanal K1 leitet dadurch den Wind W in Richtung der Kühleinheit 210 zur Luftkühlung des Generators.

Die Kühleinheit 210 erstreckt sich in der Axialrichtung A zwischen einem ersten Ende 211, welches in dem Betriebszustand der Windenergieanlage 100 bezogen auf die Windrichtung des Windes W stromaufwärts angeordnet ist, und einem zweiten Ende 212, welches in dem Betriebszustand der Windenergieanlage 100 bezogen auf die Windrichtung des Windes W stromaufwärts des ersten Endes 211 angeordnet ist. Die erste Luftleiteinheit 221 ist bezogen auf die Erstreckung der Kühleinheit 210 in der Axialrichtung A mittig zwischen dem ersten Ende 211 und dem zweiten Ende 212 angeordnet.

In der in Fig. 2 dargestellten Ausführungsform ist die Luftkühlvorrichtung 200 ringförmig ausgebildet. In dieser bevorzugten Ausführungsform umschließt die Luftkühlvorrichtung 200 die Kühleinheit 210 bzw. den Generator vollständig. Alternativ kann bevorzugt sein, dass die Luftkühlvorrichtung 200 teilringförmig ausgebildet ist, wie dies in Fig. 3 dargestellt ist. In dieser bevorzugten Ausführungsform umschließt die Luftkühlvorrichtung 200 die Kühleinheit 210 bzw. den Generator lediglich teilweise.

Die in den Fig. 2 und 3 dargestellte erste Luftleiteinheit 221 der Luftleitvorrichtung 220 umfasst mehrere Teilringsegmente. Die erste Luftleiteinheit 221 der in Fig. 2 gezeigten Luftkühlvorrichtung 200 umfasst beispielsweise sechs Teilringsegmente und die in Fig. 3 gezeigten Luftkühlvorrichtung 200 umfasst beispielsweise zwei Teilringsegmente.

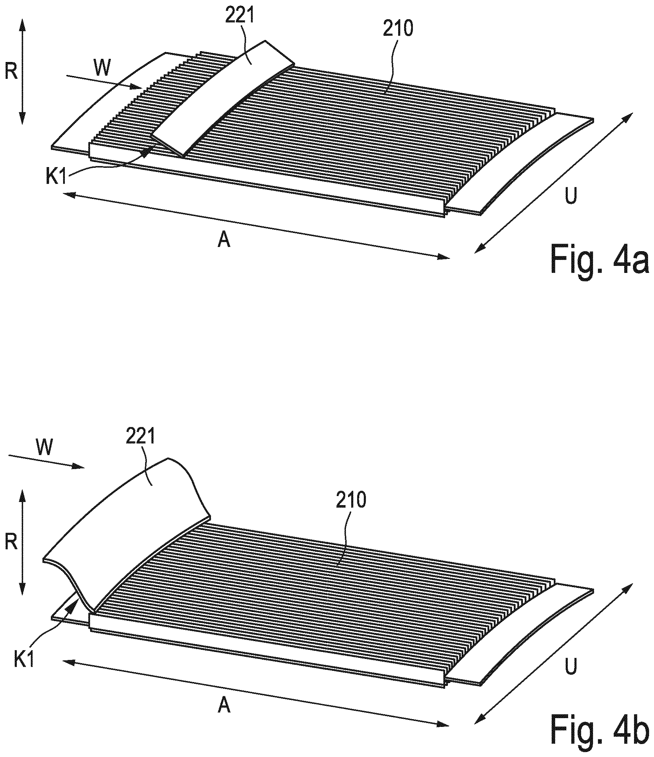

Fig. 4a und 4b zeigen jeweils eine schematische dreidimensionale, detaillierte Ansicht einer Kühleinheit 210 mit einer ersten und zweiten beispielhaften Ausführungsform einer Luftkühlvorrichtung 200 mit jeweils einer einzigen ersten Luftleiteinheit 221. Es ist zu sehen, dass die Kühleinheit 210 mehrere Kühlrippen mit einer Haupterstreckung in der Axialrichtung A aufweist, die in der Umfangsrichtung U orthogonal zu der Axialrichtung A beabstandet angeordnet sind. Die Luftleitvorrichtung 220 weist hingegen eine Haupterstreckung in Umfangsrichtung U auf, die im Betriebszustand der Windenergieanlage 100 im Wesentlichen quer zur Windrichtung des Windes W liegt.

In der in Fig. 4a dargestellten Ausführungsform weist die erste Luftleiteinheit 221 ein lineares Profil auf. In der in Fig. 4b dargestellten Ausführungsform ist das Profil der ersten Luftleiteinheit 221 S-förmig ausgebildet, weist also konvexe und konkave Profilabschnitte auf. In beiden Ausführungsformen ist die erste Luftleiteinheit 221 bezogen auf die Erstreckung der Kühleinheit 210 in der Axialrichtung ausgehend von dem ersten Ende 211 in einem ersten Drittel der Kühleinheit 210 angeordnet. In der in Fig. 4b dargestellten Ausführungsform ist die erste Luftleiteinheit 221 an dem ersten Ende 211 der Kühleinheit 210 angeordnet. Dies bewirkt zwar einen besonders starken Kühlungseffekt in der ersten Hälfte der Kühleinheit, bewirkt hingegen eine geringere Reduktion der Temperatur in der zweiten Hälfte der Kühleinheit 210. Im Unterschied dazu bewirkt die mittig im ersten Drittel der Kühleinheit angeordnete erste Luftleiteinheit 221 ausgehend von dem ersten Ende 211 eine Abkühlung der ersten zwei Drittel der Kühleinheit 210 und bewirkt im dritten Drittel eine geringere Abkühlung.

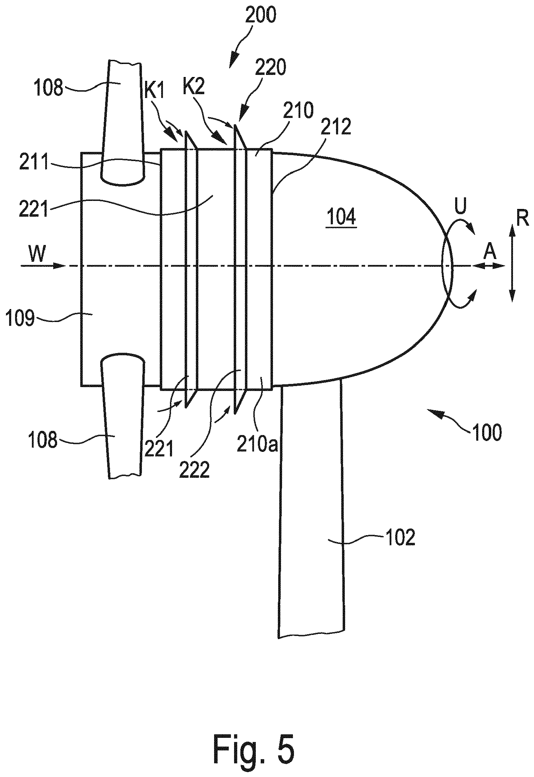

Fig. 5 zeigt eine schematische Seitenansicht einer Windenergieanlage 100 mit einem Generator mit einer dritten bevorzugten Ausführungsform einer Luftkühlvorrichtung 200. Diese bevorzugte Ausführungsform basiert auf der in Figur 2 dargestellten Ausführungsform einer Luftkühlvorrichtung 200. Die in Figur 5 dargestellte Luftkühlvorrichtung 200 weist zusätzlich eine zweite Luftleiteinheit 222 auf, welche in der Axialrichtung versetzt zu der ersten Luftleiteinheit 221 angeordnet ist. Dies hat den Effekt, dass mehr Wind zur Kühlung der Kühleinheit zugeführt wird. Ferner hat diese Anordnung den Effekt, dass die Kühleinheit 210 und damit der Generator gleichmäßig gekühlt werden, also in Axialrichtung A und Umfangsrichtung U ein geringes Temperaturgefälle besteht.

In der vorliegenden Ausführungsform weist die erste Luftleiteinheit einen ersten spitzen Winkel, eine erste Länge und eine erste Höhe auf. Die zweite Luftleiteinheit 222 weist entsprechend einen zweiten spitzen Winkel, eine zweite Länge und eine zweite Höhe auf. Vorliegend entspricht die erste Länge der ersten Luftleiteinheit 221 im Wesentlichen der zweiten Länge der zweiten Luftleiteinheit 222. Die zweite Höhe und der zweite spitze Winkel der zweiten Luftleiteinheit 222 sind hingegen im Vergleich zu dem ersten spitzen Winkel und der ersten Länge der ersten Luftleiteinheit 221 größer.

Es ist zu sehen, dass die Kühleinheit 210 in der Axialrichtung A zwischen einem ersten Ende 211, welche in dem Betriebszustand der Windenergieanlage 100 bezogen auf die Windrichtung des Windes W stromaufwärts angeordnet ist, und einem zweiten Ende 212, welche in dem Betriebszustand der Windenergieanlage 100 bezogen auf die Windrichtung des Windes W stromaufwärts des ersten Endes angeordnet ist, erstreckt. Dabei ist die erste Luftleiteinheit 221 bezogen auf die Erstreckung der Kühleinheit 210 ausgehend von dem ersten Ende 211 in der Axialrichtung einem ersten Drittel der Kühleinheit 210 angeordnet. Die zweite Luftleiteinheit 222 ist bezogen auf die Erstreckung der Kühleinheit 210 ausgehend von dem ersten Ende 211 in der Axialrichtung A in einem dritten Drittel der Kühleinheit 210 angeordnet

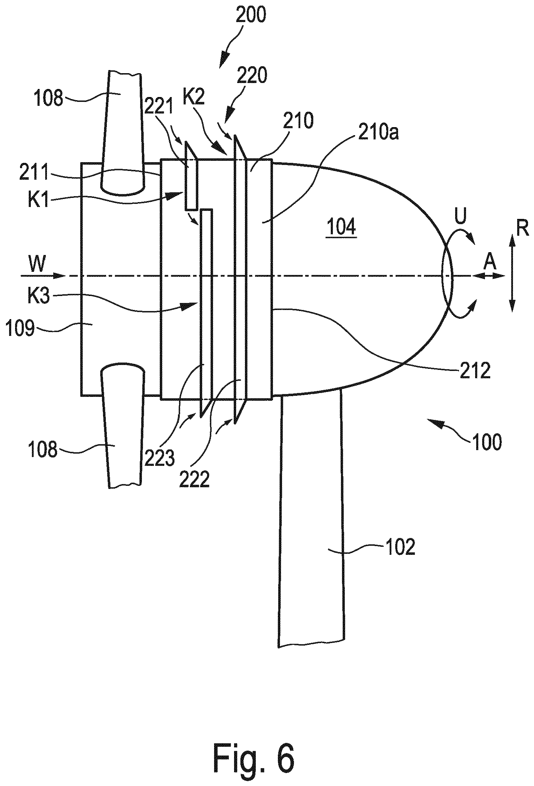

Fig. 6 zeigt eine schematische Seitenansicht einer Windenergieanlage mit einem Generator mit einer vierten beispielhaften Ausführungsform einer Luftkühlvorrichtung 200. Diese bevorzugte Ausführungsform basiert auf der in Figur 3 dargestellten Ausführungsform einer Luftkühlvorrichtung 200. Die in Figur 6 dargestellte Luftkühlvorrichtung 200 weist zusätzlich eine zweite und dritte Luftleiteinheit 222, 223 auf, welche in der Axialrichtung versetzt zueinander angeordnet sind. Dies hat den Effekt, dass mehr Wind zur Kühlung der Kühleinheit zugeführt wird. Ferner hat diese Anordnung den Effekt, dass die Kühleinheit und damit der Generator gleichmäßig gekühlt werden, also in Axialrichtung und Umfangsrichtung ein geringes Temperaturgefälle besteht.

Es ist zu sehen, dass die erste Luftleiteinheit 221 als Teilringsemgent angeordnet ist, welches auf einer Oberseite der Gondel 104 im Betriebszustand der Windenergieanlage 100 angeordnet ist. Die zweite Luftleiteinheit 222 ist ringförmig ausgebildet. In der Axialrichtung A versetzt dazu ist - ähnlich wie in Figur 5 - die zweite Luftleiteinheit angeordnet. Ferner ist in der Axialrichtung A zwischen der ersten und zweiten Luftleiteinheit 221, 222 eine dritte Luftleiteinheit 223 angeordnet. Die dritte Luftleiteinheit 223 umfasst mehrere Teilringsegmente und ist teilringförmig ausgebildet.

In der vorliegenden Ausführungsform weist die erste Luftleiteinheit einen ersten spitzen Winkel, eine erste Länge und eine erste Höhe auf. Die zweite Luftleiteinheit 222 weist entsprechend einen zweiten spitzen Winkel, eine zweite Länge und eine zweite Höhe auf. Ferner weist die dritte Luftleiteinheit 222 weist einen dritten spitzen Winkel, eine dritte Länge und eine dritte Höhe auf. Vorliegend entspricht die erste Länge der ersten Luftleiteinheit 221 im Wesentlichen der zweiten und dritten Länge der zweiten und dritten Luftleiteinheit 222, 223. Die dritte Höhe und der dritte spitze Winkel der dritten Luftleiteinheit 223 entspricht der ersten Höhe und dem ersten spitzen Winkel der ersten Luftleiteinheit 221. In Umfangsrichtung weist die erste Luftleiteinheit 221 eine geringere Breite auf als die zweite Luftleiteinheit 222. Die zweite Höhe und der zweite spitze Winkel der zweiten Luftleiteinheit 222 sind hingegen im Vergleich zu dem ersten und dritten spitzen Winkel und der ersten und dritten Länge der ersten und dritten Luftleiteinheit 221,223 größer.

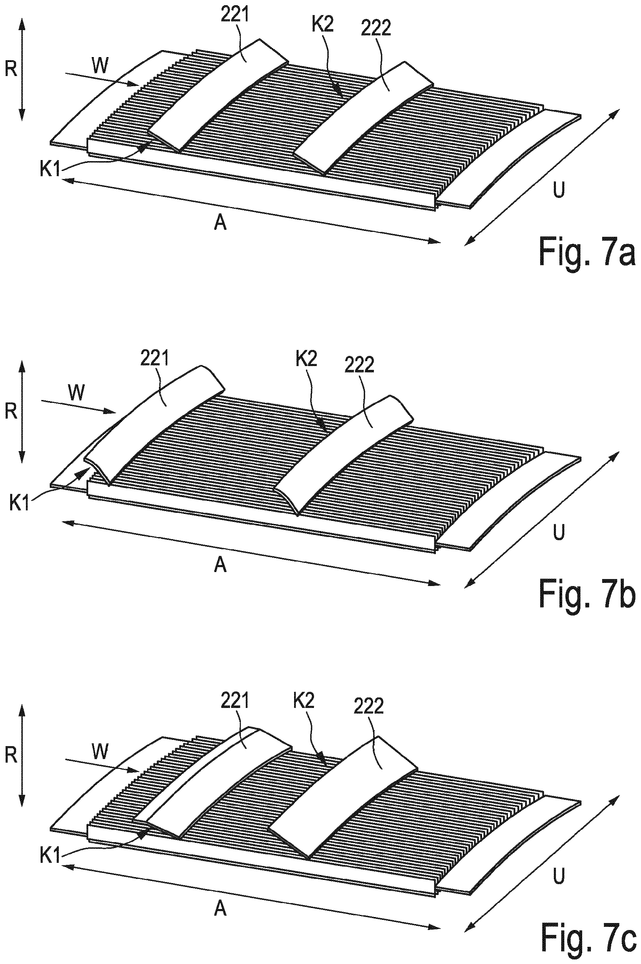

Fig. 7a, 7b und 7c zeigen eine schematische dreidimensionale Ansicht einer Kühleinheit 210 mit einer ersten, zweiten und dritten beispielhaften Ausführungsform einer Luftkühlvorrichtung 200 mit einer ersten und zweiten Luftleiteinheit 221, 222. In allen drei Ausführungsbeispielen ist die erste Luftleiteinheit 221 in einem ersten Drittel angeordnet und die zweite Luftleiteinheit 222 am Übergang vom zweiten zum dritten Drittel angeordnet. In der in Figur 7b dargestellten Ausführungsform ist die erste Luftleiteinheit im Bereich des ersten Endes 211 angeordnet.

Die drei in den Figuren 7a, 7b und 7c dargestellten Ausführungsbeispiele zeigen unterschiedliche bevorzugte Ausführungsformen von Profilen der Luftleiteinheiten 221, 222, 223. In Figur 7a weisen die erste und zweite Luftleiteinheit 221, 222 ein lineares Profil auf. Die erste und zweite Luftleiteinheit 221, 222 weisen dieselbe Länge, Breite und Höhe auf. In dem in Figur 7b dargestellten Beispiel weisen die erste und zweite Luftleiteinheit ein S-förmiges Profil auf. Die Länge, Breite und Höhe der ersten und zweiten Luftleiteinheit 221, 222 sind im Wesentlichen identisch. In dem in Figur 7c dargestellten Ausführungsbeispiel der Luftleitvorrichtung 220 weist die erste Luftleiteinheit 221 ein Profil mit einer Kante auf. Die Kante unterteilt das Profil in zwei lineare Profilabschnitte unterschiedlicher Steigung. Die zweite Luftleiteinheit 222 weist ein lineares Profil auf. Insbesondere weist die Kante eine Kantenlänge auf, die vorzugsweise mindestens 0 % und maximal 200 % der Kühleinheits-Länge entspricht, die sich zwischen dem ersten Ende 211 und zweiten Ende 212 erstreckt. Die zweite Höhe und der zweite spitze Winkel der zweiten Luftleiteinheit 222 ist jedoch größer als die erste Höhe und der erste spitze Winkel der ersten Luftleiteinheit 221.

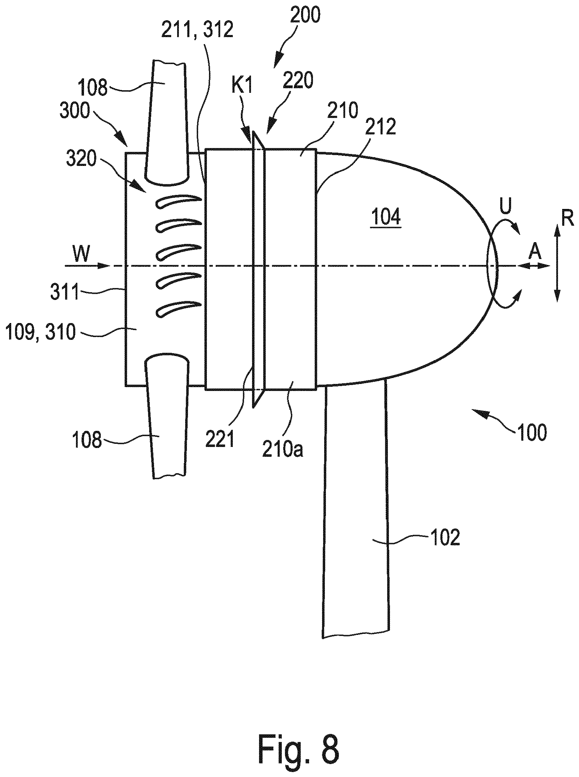

Fig. 8 zeigt eine schematische Seitenansicht einer Windenergieanlage 100 mit einem Generator basierend auf Figur 2 mit einer ersten beispielhaften Ausführungsform einer Luftführungsvorrichtung 300.

Die Luftführungsvorrichtung 300 ist zur Bereitstellung von Wind W zur Luftkühlung an einer Kühleinheit 210 eines Generators einer Windenergieanlage 100 ausgebildet. Die Luftführungsvorrichtung 300 umfasst eine Rotationseinheit 310 eines aerodynamischen Rotors 106 der Windenergieanlage 100 mit einer Rotationseinheits-Außenfläche 310a, entlang welcher der Wind W im Betrieb der Windenergieanlage 100 strömt. Dabei weist die Rotationseinheit 310 Anschlüsse zur Befestigung und/oder Durchgangsöffnungen zur Durchführung von Rotorblättern 108 des aerodynamischen Rotors 106 auf. Ferner umfasst die Luftführungsvorrichtung 300 mehrere Luftführungseinheiten 320, die an der Rotationseinheits-Außenfläche 310a der Rotationseinheit 310 zwischen den Anschlüssen oder den Durchgangsöffnungen angeordnet sind. Die Luftführungseinheiten 320 erstrecken sich ausgehend von der Rotationseinheits-Außenfläche 310a in einer Radialrichtung R nach außen und sind ausgebildet, den Wind W zur Luftkühlung des Generators zu der Kühleinheit 210 zu leiten.

Die Luftführungseinheiten sind schaufelförmig ausgebildet und weisen ein konkaves Profil auf.

Es ist zu sehen, dass sich die Rotationseinheit 310 in einer Axialrichtung A zwischen einem ersten Ende 311, welche in dem Betriebszustand der Windenergieanlage 100 bezogen auf die Windrichtung W des Windes stromaufwärts angeordnet ist, und einem zweiten Ende 312, welche in dem Betriebszustand der Windenergieanlage 100 bezogen auf die Windrichtung des Windes W stromabwärts des ersten Endes 311 angeordnet ist, erstreckt. Hierbei erstrecken sich die in dem in Figur 8 dargestellten Ausführungsbeispiel dargestellten Luftführungseinheiten 320 zwischen dem ersten und zweiten Ende 311, 312 der Rotationseinheit 310.

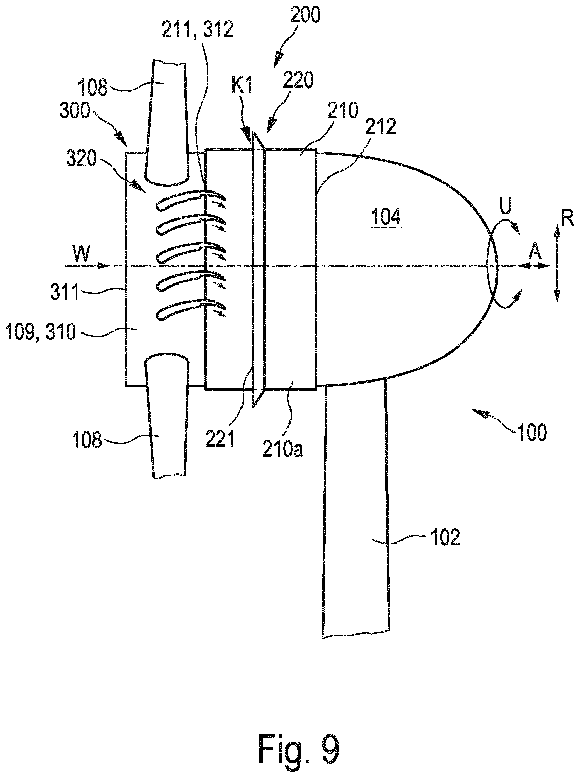

Figur 9 zeigt eine schematische Seitenansicht einer Windenergieanlage 100 mit einem Generator basierend auf Figur 2 mit einer zweiten beispielhaften Ausführungsform einer Luftführungsvorrichtung 300. Das in Figur 9 dargestellte Ausführungsbeispiel ist ähnlich zu dem in Figur 8 dargestellten Ausführungsbeispiel der Luftführungsvorrichtung 300. Die beiden Ausführungsbeispiele unterscheiden sich im Wesentlichen darin, dass sich in dem in Figur 9 dargestellten Ausführungsbeispiel die Luftführungseinheiten 320 im Unterscheid zu dem in Figur 8 dargestellten Ausführungsbeispiel in der Axialrichtung A über das zweite Ende 312 hinaus erstrecken. Ferner weisen die in Figur 9 dargestellten Luftführungseinheiten ein schaufelförmiges Profil mit einer Kante bzw. einen Sprung im Profilverlauf auf.

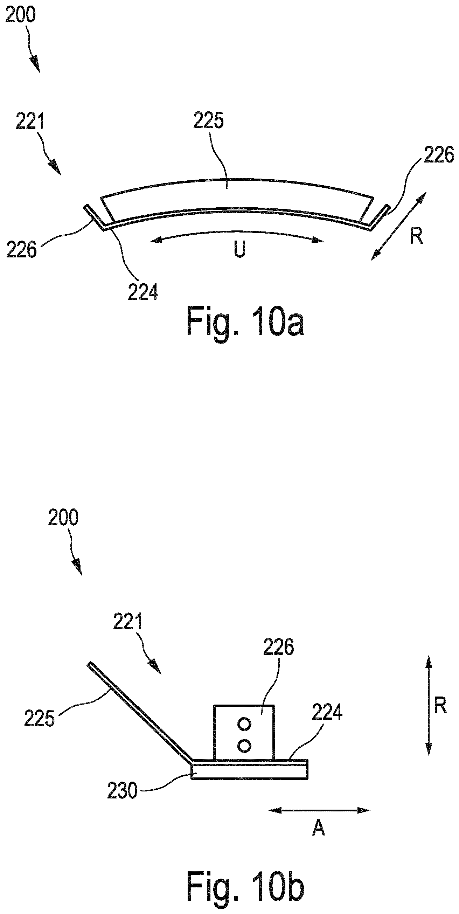

Fig. 10a und 10b zeigen eine schematische Front- und Seitenansicht einer beispielhaften Ausführungsform einer ersten Luftleiteinheit 321. Die Darstellungen und entsprechende Beschreibung gelten entsprechend auch für die zweite und dritte Luftleiteinheit 222, 223.

Die erste Luftleiteinheit 221 weist in Umfangsrichtung U eine Haupterstreckungsrichtung auf. Die erste Luftleiteinheit 221 umfasst ein Basiselemente 224, mit welchen die Luftleiteinheit an der Kühleinheit 210 angeordnet wird. Ausgehend von dem Basiselement 224 erstreckt sich ein Luftleitelement 225, welches sich im Betriebszustand der Windenergieanlage ausgehend von dem Basiselement 224 spitzwinklig in Axialrichtung A und Radialrichtung R nach außen erstreckt. Ferner ist zu sehen, dass sich das Luftleitelement in der Umfangsrichtung zwischen zwei Flanschen 226 erstreckt. Die Flansche erstrecken sich in Umfangsrichtung U und Radialrichtung R ausgehend von dem Basiselement 224 nach außen. Mittels der Flansche lassen sich in Umfangsrichtung benachbart angeordnete Teilringsegmente einer Luftleiteinheit miteinander befestigen.

In der hier dargestellten bevorzugten Ausführungsform ist ferner eine Dämpfungseinheit 230 vorgesehen, welche im Betriebszustand der Windenergieanlage 100 zwischen das Basiselement 224 und der Kühleinheit 210 angeordnet ist.

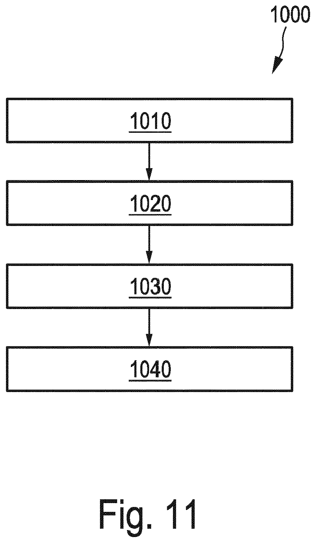

Fig. 11 zeigt ein schematisches Ablaufdiagramm eines beispielhaften Verfahrens 1000 zur Herstellung eines Generators einer Windenergieanlage 100 mit einer Luftkühlvorrichtung 200. Das Verfahren 1000 umfasst zunächst ein Bereitstellen 1010 einer Kühleinheit 210 eines Generators und einer Luftleitvorrichtung 220, die eine als Teilringsegment ausgebildete erste und/oder zweite und/oder dritte stationäre Luftleiteinheit 221, 222, 223 aufweist. In einem weiteren Schritt umfasst das Verfahren 1000 ein Anordnen 1020 der Luftleitvorrichtung 220 an einer Kühleinheits-Außenfläche 210a, wobei vorzugsweise die Kühleinheit 210 mehrere Kühlrippen mit einer Haupterstreckung in einer Axialrichtung A aufweist, die in einer Umfangsrichtung U orthogonal zu der Axialrichtung A beabstandet angeordnet sind, und die Luftleitvorrichtung 220 vorzugsweise eine Haupterstreckung im Wesentlichen in einer Umfangsrichtung U, orthogonal zu der Axialrichtung A aufweist. Schließlich umfasst das Verfahren 1000 ein Befestigen 1030 der Luftleitvorrichtung 220 an der Kühleinheits-Außenfläche 210a.

Der Schritt des Befestigens 1030 der Luftleitvorrichtung 220 an der Kühleinheits-Außenfläche 210a umfasst insbesondere ein stoffschlüssiges Verbinden. Das stoffschlüssige Verbinden ist vorzugsweise ein Schweißverbinden. Ergänzend oder alternativ umfasst der Schritt des Befestigens 1030 ein kraftschlüssiges Verbinden. Das kraftschlüssige Verbinden ist insbesondere ein Schraub- und/oder Magnetverbinden. Ferner umfasst der Schritt des Befestigens 1030 ergänzend oder alternativ ein formschlüssiges Verbinden der Luftleitvorrichtung 220 mit der Kühleinheit 210. Die formschlüssige Verbindung wird insbesondere durch eine Hakenverbindung realisiert.

Der Schritt des Befestigens 1030 der Luftleitvorrichtung 220 an der Kühleinheits-Außenfläche 210a kann ferner bevorzugt ein stoffschlüssiges Verbinden, insbesondere Schweißverbinden, und/oder kraftschlüssiges Verbinden, insbesondere Schraub- und/oder Magnetverbinden, und/oder ein formschlüssiges Verbinden, insbesondere eine Haken- und/oder Schnappverbindung, von benachbart angeordneten Teilringsegmenten einer ersten Luftleiteinheit 221 sein, so dass diese eine als Ring oder Teilring ausgebildete erste Luftleiteinheit 221 ausbilden.

Ferner kann der Schritt des Befestigens 1030 der Luftleitvorrichtung 220 an der Kühleinheits-Außenfläche 210a bevorzugt ein stoffschlüssiges Verbinden, insbesondere Schweißverbinden, und/oder kraftschlüssiges Verbinden, insbesondere Schraub- und/oder Magnetverbinden, und/oder ein formschlüssiges Verbinden, insbesondere eine Haken- und/oder Schnappverbindung, von benachbart angeordneten Teilringsegmenten einer zweiten Luftleiteinheit 222 sein, so dass diese eine als Ring oder Teilring ausgebildete zweite Luftleiteinheit 222 ausbilden.

Ferner kann der Schritt des Befestigens 1030 der Luftleitvorrichtung 220 an der Kühleinheits-Außenfläche 210a bevorzugt ein stoffschlüssiges Verbinden, insbesondere Schweißverbinden, und/oder kraftschlüssiges Verbinden, insbesondere Schraub- und/oder Magnetverbinden, und/oder ein formschlüssiges Verbinden, insbesondere eine Haken- und/oder Schnappverbindung, von benachbart angeordneten Teilringsegmenten einer dritten Luftleiteinheit 223 sein, so dass diese eine als Ring oder Teilring ausgebildete dritte Luftleiteinheit 223 ausbilden.

Ferner kann bevorzugt sein, dass das Verfahren 100 den Schritt eines Anordnens 1040 einer Dämpfungseinheit 230 zwischen der Luftleitvorrichtung 220 und der Kühleinheit 210 umfasst.

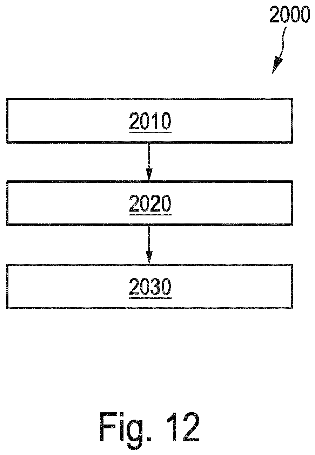

Fig. 12 zeigt ein schematisches Ablaufdiagramm eines beispielhaften Verfahrens 2000 zur Herstellung einer Windenergieanlage 100. Das Verfahren 2000 zur Herstellung der Windenergieanlage 100 umfasst den Schritt eines Bereitstellens 2010 einer Rotationseinheit 310 eines aerodynamischen Rotors 106 der Windenergieanlage 100 mit einer Rotationseinheits-Außenfläche 310a, entlang welcher der Wind W im Betrieb der Windenergieanlage 100 strömt. Ferner umfasst das Verfahren 2000 ein Anordnen 2020 einer oder mehrerer Luftführungseinheiten 320 an der Rotationseinheits-Außenfläche 310a der Rotationseinheit 310 zwischen den Anschlüssen oder den Durchgangsöffnungen. Weiterhin umfasst das Verfahren 2000 ein Befestigen 2030 der Rotationseinheit 310 an einem Generator oder einem gemäß dem zuvor beschriebenen Verfahren 1000 hergestellten Generator.

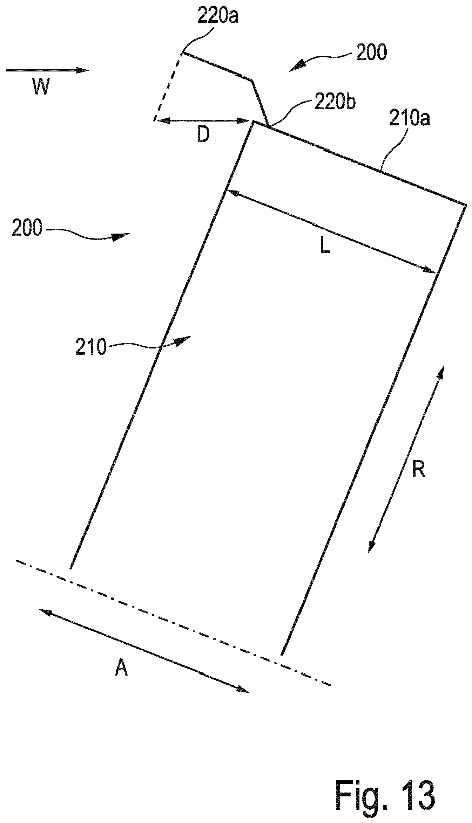

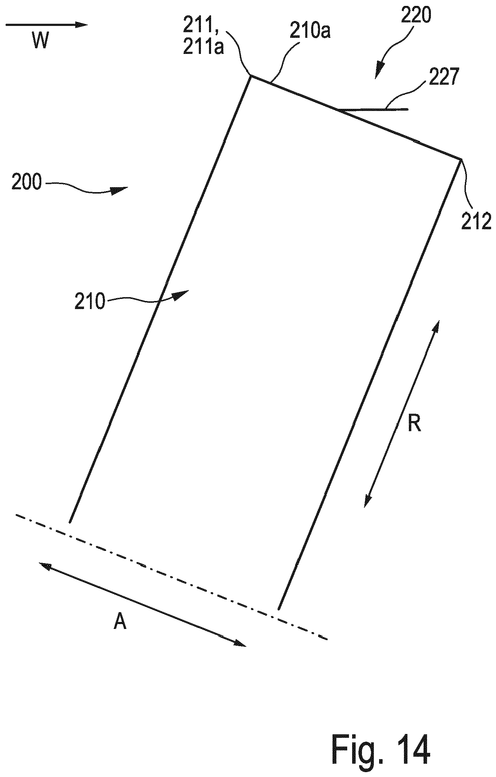

Die Figuren 13 und 14 zeigen jeweils eine schematische Seitenansicht eines Generators mit einer weiteren beispielhaften Ausführungsform einer Luftkühlvorrichtung 200.

Figur 13 zeigt eine bevorzugte Fortbildung der Luftkühlvorrichtung 200, bei der sich die Luftleitvorrichtung 220 im Betriebszustand in der Axialrichtung A zwischen einer Luftleitanströmkante 220a und einer Lufteinleitkante 220b erstreckt, wobei die Luftleitanströmkante 220a gegenüber der Lufteinleitkante 220b bezogen auf den Wind W stromaufwärts angeordnet ist. In dieser bevorzugten Fortbildung ist die Kühleinheits-Anströmkante 211a in der Axialrichtung A zwischen der Luftleitanströmkante 220a und der Lufteinleitkante 220b angeordnet. Die Kühleinheits-Anströmkante 211a ist also in Strömungsrichtung des Windes W stromabwärts der Luftleitanströmkante 220a und stromaufwärts der Lufteinleitkante 220b angeordnet. Hierbei ist zu erkennen, dass sich die Kühleinheits-Außenfläche 210a ausgehend von der Kühleinheits-Anströmkante211a in der Axialrichtung A zwischen dem ersten und zweiten Ende 211, 212 der Kühleinheit 210 mit einer Kühleinheits-Kühllänge L erstreckt. Die Luftleitvorrichtung 220 ist in dieser bevorzugten Ausführungsform derart angeordnet, dass der Abstand D zwischen der Luftleitanströmkante 220a und der Kühleinheits-Anströmkante 211a etwa einem Drittel der Kühleinheits-Kühllänge L entspricht.

Figur 14 zeigt eine Ausführungsform einer Luftkühlvorrichtung 200 mit einer vierten Luftleiteinheit 227, die sich ausgehend von der Kühleinheits-Außenfläche 227 mit einem stumpfen Winkel in der Radialrichtung R nach außen erstreckt. Hierbei ist die vierte Luftleiteinheit 227 derart an der Kühleinheits-Außenfläche 210a angeordnet, dass diese sich mit dem stumpfen Winkel in Richtung des anströmenden Windes W öffnet. Es ist zu erkennen, dass die vierte Luftleiteinheit 227 bei dieser Ausführungsform derart an der Kühleinheits-Außenfläche 210a angeordnet ist, dass diese einen spitzen Winkel an der vom Wind W abgewandt Seite ausbilden.

### BEZUGSZEICHENLISTE

- 100: Windenergieanlage
- 102: Turm
- 104: Gondel
- 106: Rotor
- 108: Rotorblätter
- 109: Nabe
- 110: Spinner
- 200: Luftkühlvorrichtung
- 210: Kühleinheit
- 210a: Kühleinheits-Außenfläche
- 211: erstes Ende der Kühleinheit
- 211a: Kühleinheits-Anströmkante
- 212: zweites Ende der Kühleinheit
- 220: Luftleitvorrichtung
- 220a: Luftleitanströmkante
- 220b: Lufteinleitkante
- 221: erste Lufteinheit
- 222: zweite Lufteinheit
- 223: dritte Lufteinheit
- 224: Basiselement
- 225: Luftleitelement
- 226: Flansch
- 227: vierte Lufteinheit
- 230: Dämpfungseinheit
- 300: Luftführungsvorrichtung
- 310: Rotationseinheit
- 310a: Rotationseinheits-Außenfläche
- 320: Luftführungseinheit
- A: Axialrichtung
- D: Abstand zwischen der Luftleitanströmkante und der Kühleinheits-Anströmkante
- K1: erster konvergierender Luftleitkanal
- K2: zweiter konvergierender Luftleitkanal
- K3: dritter konvergierender Luftleitkanal
- L: Kühleinheits-Kühllänge
- R: Radialrichtung
- U: Umfangsrichtung
- W: Wind

## Patentansprüche

1. Luftkühlvorrichtung (200) zur Luftkühlung eines Generators einer Windenergieanlage (100) mittels Wind (W), umfassend
- eine Kühleinheit (210) des Generators mit einer Kühleinheits-Außenfläche (210a), welche der Wind (W) zur Luftkühlung des Generators in einem Betriebszustand der Windenergieanlage (100) anströmt,
**dadurch gekennzeichnet, dass**
- eine Luftleitvorrichtung (220) an der Kühleinheit (210) angeordnet ist, die sich ausgehend von der Kühleinheits-Außenfläche (210a) in einer Radialrichtung nach außen erstreckt und ausgebildet ist, in dem Betriebszustand der Windenergieanlage (100) den Wind (W) zur Luftkühlung in der Radialrichtung nach innen in Richtung der Kühleinheit (210) zu leiten.

2. Luftkühlvorrichtung (200) nach Anspruch 1, wobei
- die Luftleitvorrichtung (220) eine erste Luftleiteinheit (221) aufweist, die sich ausgehend von der Kühleinheits-Außenfläche (210a) spitzwinklig in der Radialrichtung nach außen erstreckt und/oder mit der Kühleinheit (210) einen konvergierenden ersten Luftleitkanal (K1) bildet, der ausgebildet ist, in einem Betriebszustand der Windenergieanlage (100) den Wind (W) zur Luftkühlung in der Radialrichtung nach innen in Richtung der Kühleinheit (210) zu leiten, und/oder
- die Kühleinheit (210) mehrere Kühlrippen mit einer Haupterstreckung in einer Axialrichtung (A) aufweist, die in einer Umfangsrichtung (U) orthogonal zu der Axialrichtung (A) beabstandet angeordnet sind, und die Luftleitvorrichtung (220) eine Haupterstreckung im Wesentlichen in der Umfangsrichtung (U) aufweist.

3. Luftkühlvorrichtung (200) nach einem der Ansprüche 1 oder 2, wobei die Luftleitvorrichtung (220)
- eine zweite Luftleiteinheit (222) aufweist, die in der Axialrichtung (A) gegenüber der ersten Luftleiteinheit (221) versetzt angeordnet ist und die sich ausgehend von der Kühleinheits-Außenfläche (210a) spitzwinklig in der Radialrichtung nach außen erstreckt und/oder mit der Kühleinheit (210) einen konvergierenden zweiten Luftleitkanal (K2) bildet, der ausgebildet ist, in dem Betriebszustand der Windenergieanlage (100) den Wind (W) zur Luftkühlung in der Radialrichtung nach innen in Richtung der Kühleinheit (210) zu leiten, und/oder
- eine dritte Luftleiteinheit (223) aufweist, die in der Axialrichtung (A) gegenüber der ersten und/oder zweiten Luftleiteinheit (221, 222) versetzt angeordnet ist und die sich ausgehend von der Kühleinheits-Außenfläche (210a) spitzwinklig in der Radialrichtung nach außen erstreckt und/oder mit der Kühleinheit (210) einen konvergierenden dritten Luftleitkanal (K3) bildet, der ausgebildet ist, in dem Betriebszustand der Windenergieanlage (100) den Wind (W) zur Luftkühlung in der Radialrichtung nach innen in Richtung der Kühleinheit (210) zu leiten,
- wobei vorzugsweise die erste und/oder zweite und/oder dritte Luftleiteinheit (221, 222, 223) aus einem oder mehreren Teilringsegmenten ausgebildet sind.

4. Luftkühlvorrichtung (200) nach einem der Ansprüche 1 bis 3, wobei
- sich ausgehend von der Kühleinheits-Außenfläche (210a) die erste Luftleiteinheit (221) mit einem ersten spitzen Winkel erstreckt, die zweite Luftleiteinheit (222) mit einem zweiten spitzen Winkel erstreckt und die dritte Luftleiteinheit (223) mit einem dritten spitzen Winkel erstreckt, wobei
∘ der erste und/oder zweite und/oder dritte spitze Winkel gleich sind, und/oder
∘ der erste spitze Winkel kleiner ist als der zweite und/oder dritte spitze Winkel, und/oder
∘ der erste spitze Winkel größer ist als der zweite und/oder dritte spitze Winkel, und/oder
- sich ausgehend von der Kühleinheits-Außenfläche (210a) die erste Luftleiteinheit (221) in der Radialrichtung (R) mit einer ersten Höhe erstreckt, die zweite Luftleiteinheit in der Radialrichtung (R) mit einer zweiten Höhe erstreckt und die dritte Luftleiteinheit in der Radialrichtung (R) mit einer dritten Höhe erstreckt, wobei
∘ der erste und/oder zweite und/oder dritte Höhe gleich sind und/oder
∘ die erste Höhe kleiner ist als die zweite und/oder dritte Höhe, und/oder
- sich ausgehend von der Kühleinheits-Außenfläche (210a) die erste Luftleiteinheit (221) in der Axialrichtung (A) mit einer ersten Länge erstreckt, die zweite Luftleiteinheit (221) in der Axialrichtung (A) mit einer zweiten Länge erstreckt und die dritte Luftleiteinheit (223) in der Axialrichtung (A) mit einer dritten Länge erstreckt, wobei
∘ die erste und/oder zweite und/oder dritte Länge gleich sind, und/oder
∘ die erste Länge kleiner ist als die zweite und/oder dritte Länge, und/oder
∘ die erste Länge größer ist als die zweite und/oder dritte Länge.

5. Luftkühlvorrichtung (200) nach einem der Ansprüche 1 bis 4, wobei sich die Kühleinheit (210) in der Axialrichtung (A) zwischen einem ersten Ende (211), welche in dem Betriebszustand der Windenergieanlage (100) bezogen auf die Windrichtung des Windes (W) stromaufwärts angeordnet ist, und einem zweiten Ende (212), welche in dem Betriebszustand der Windenergieanlage (100) bezogen auf die Windrichtung des Windes (W) stromaufwärts des ersten Endes angeordnet ist, erstreckt, wobei
- die erste Luftleiteinheit (221) bezogen auf die Erstreckung der Kühleinheit (210) ausgehend von dem ersten Ende (211) in der Axialrichtung einem ersten Drittel und/oder einer ersten Hälfte der Kühleinheit (210) angeordnet ist, und/oder
- die zweite Luftleiteinheit (222) bezogen auf die Erstreckung der Kühleinheit (210) ausgehend von dem ersten Ende (211) in der Axialrichtung (A) einem zweiten oder dritten Drittel und/oder einer zweiten Hälfte der Kühleinheit (210) angeordnet ist, und/oder
- die dritte Luftleiteinheit (223) bezogen auf die Erstreckung der Kühleinheit (210) ausgehend von dem ersten Ende (211) in der Axialrichtung (A) einem ersten, zweiten oder dritten Drittel und/oder einer ersten oder zweiten Hälfte der Kühleinheit (210) angeordnet ist.

6. Luftkühlvorrichtung (200) nach einem der Ansprüche 1 bis 5, die erste und/oder zweite und/oder dritte Luftleiteinheit (221, 222, 223) jeweils aufweisend
- ein Basiselement (224), welches zur Anordnung der jeweiligen Luftleiteinheit (221, 222, 223) an der Kühleinheit (210) ausgebildet ist, und/oder
- ein Luftleitelement (225), welches sich ausgehend von dem Basiselement (224) spitzwinklig erstreckt und mit der der Kühleinheit (210) einen konvergierenden Luftleitkanal (K1, K2, K3) bildet, der ausgebildet ist, in einem Betriebszustand der Windenergieanlage (100) den Wind zur Luftkühlung in Richtung der Kühleinheit (210) zu leiten, und/oder
- einen Flansch (226), welcher sich ausgehend von dem Basiselement (224) winklig erstreckt und zur Verbindung von in Umfangsrichtung (U) benachbart angeordneten Luftleiteinheiten (221, 222, 223) ausgebildet ist.

7. Luftkühlvorrichtung (200) nach einem der Ansprüche 1 bis 6, aufweisend eine Dämpfungseinheit (230), welche zwischen der Luftleitvorrichtung (220) und der Kühleinheit (210) angeordnet ist.

8. Luftkühlvorrichtung (200) nach einem der Ansprüche 1 bis 7,
- wobei sich die Luftleitvorrichtung (220) im Betriebszustand in der Axialrichtung (A) zwischen einer Luftleitanströmkante (220a) und einer Lufteinleitkante (220b) erstreckt, wobei die Luftleitanströmkante (220a) gegenüber der Lufteinleitkante (220b) bezogen auf den Wind (W) stromaufwärts angeordnet ist, und/oder
- wobei die Kühleinheits-Außenfläche (210a) eine Kühleinheits-Anströmkante (211a) aufweist und die Luftleitvorrichtung (220) derart an der Kühleinheit (210) angeordnet ist, dass die Kühleinheits-Anströmkante (211a) in der Axialrichtung (A) zwischen der Luftleitanströmkante (220a) und der Lufteinleitkante (220b) angeordnet ist, und/oder
- wobei sich die Kühleinheits-Außenfläche (210a) ausgehend von der Kühleinheits-Anströmkante (211a) in der Axialrichtung (A) mit einer Kühleinheits-Kühllänge (L) erstreckt und der Abstand (D) zwischen der Luftleitanströmkante (220a) und der Kühleinheits-Anströmkante (211a) mindestens 0 % der Kühleinheits-Kühllänge (L) beträgt und maximal 100 % der Kühleinheits-Kühllänge (L) beträgt, und/oder
- wobei die Luftleitvorrichtung (220) eine vierte Luftleiteinheit (227) aufweist, die sich ausgehend von der Kühleinheits-Außenfläche (210a) mit einem stumpfen Winkel in der Radialrichtung (R) nach außen erstreckt.

9. Generator einer Windenergieanlage (100) umfassend eine Luftkühlvorrichtung (200) nach einem der vorhergehenden Ansprüche 1 bis 8.

10. Luftführungsvorrichtung (300) zur Bereitstellung von Wind (W) zur Luftkühlung an einer Kühleinheit (210) eines Generators einer Windenergieanlage (100), umfassend
- eine Rotationseinheit (310) eines aerodynamischen Rotors (106) der Windenergieanlage (100) mit einer Rotationseinheits-Außenfläche (310a), entlang welcher der Wind (W) im Betrieb der Windenergieanlage (100) strömt, wobei
- die Rotationseinheit (310) Anschlüsse zur Befestigung und/oder Durchgangsöffnungen zur Durchführung von Rotorblättern (108) des aerodynamischen Rotors (106) aufweist,
**dadurch gekennzeichnet, dass**
- eine oder mehrere Luftführungseinheiten (320) an der Rotationseinheits-Außenfläche (310a) der Rotationseinheit (310) zwischen den Anschlüssen oder den Durchgangsöffnungen angeordnet sind, die sich ausgehend von der Rotationseinheits-Außenfläche (310a) in einer Radialrichtung (R) nach außen erstreckt und ausgebildet ist, den Wind (W) zur Luftkühlung des Generators zu der Kühleinheit (210) zu leiten.

11. Luftführungsvorrichtung (300) nach Anspruch 10, wobei
- sich die Rotationseinheit (310) in einer Axialrichtung (A) zwischen einem ersten Ende (311), welche in dem Betriebszustand der Windenergieanlage (100) bezogen auf die Windrichtung (W) des Windes stromaufwärts angeordnet ist, und einem zweiten Ende (312), welche in dem Betriebszustand der Windenergieanlage (100) bezogen auf die Windrichtung des Windes stromabwärts des ersten Endes (311) angeordnet ist, erstreckt, wobei die eine oder die mehreren Luftführungseinheiten (320) derart an der Rotationseinheit (310) angeordnet sind, dass sich diese
∘ zwischen dem ersten und zweiten Ende (311, 312) der Rotationseinheit (310) erstrecken, und/oder
∘ in der Axialrichtung (A) über das zweite Ende (312) hinaus erstrecken, und/oder
- sich die eine oder mehreren Luftführungseinheiten (320) ausgehend von der Rotationseinheits-Außenfläche (310a) mit einem Neigungswinkel in der Radialrichtung (R) nach außen erstrecken.

12. Windenergieanlage aufweisend einen Generator nach Anspruch 9 und/oder eine Luftführungsvorrichtung (300) nach einem der Ansprüche 10 oder 11.

13. Verfahren (1000) zur Herstellung eines Generators einer Windenergieanlage (100) mit einer Luftkühlvorrichtung (200), insbesondere mit einer Luftkühlvorrichtung (200) nach einem der vorhergehenden Ansprüche 1 bis 8, **gekennzeichnet durch** die Schritte:
- Bereitstellen (1010) einer Kühleinheit (210) eines Generators und einer Luftleitvorrichtung (220), die eine als Teilringsegment ausgebildete erste und/oder zweite und/oder dritte stationäre Luftleiteinheit (221, 222, 223) aufweist;
- Anordnen (1020) der Luftleitvorrichtung (220) an einer Kühleinheits-Außenfläche (210a), wobei vorzugsweise die Kühleinheit (210) mehrere Kühlrippen mit einer Haupterstreckung in einer Axialrichtung (A) aufweist, die in einer Umfangsrichtung (U) orthogonal zu der Axialrichtung (A) beabstandet angeordnet sind, und die Luftleitvorrichtung (220) vorzugsweise eine Haupterstreckung im Wesentlichen in einer Umfangsrichtung (U), orthogonal zu der Axialrichtung (A) aufweist; und
- Befestigen (1030) der Luftleitvorrichtung (220) an der Kühleinheits-Außenfläche (210a).

14. Verfahren (1000) nach dem vorhergehenden Anspruch 13, wobei der Schritt des Befestigens (1030) der Luftleitvorrichtung (220) an der Kühleinheits-Außenfläche (210a) umfasst:
- stoffschlüssiges Verbinden, insbesondere Schweißverbinden, und/oder kraftschlüssiges Verbinden, insbesondere Schraubverbinden, und/oder ein formschlüssiges Verbinden der Luftleitvorrichtung (220) mit der Kühleinheit (210) und/oder
- stoffschlüssiges Verbinden, insbesondere Schweißverbinden, und/oder kraftschlüssiges Verbinden, insbesondere Schraubverbinden, und/oder ein formschlüssiges Verbinden,
∘ von benachbart angeordneten Teilringsegmenten einer ersten Luftleiteinheit (221), so dass diese eine als Ring ausgebildete erste Luftleiteinheit (221) ausbilden, und/oder
∘ von benachbart angeordneten Teilringsegmenten einer zweiten Luftleiteinheit (222), so dass diese eine als Ring ausgebildete zweite Luftleiteinheit (222) ausbilden, und/oder
∘ von benachbart angeordneten Teilringsegmenten einer dritten Luftleiteinheit (223), so dass diese eine als Ring ausgebildete dritte Luftleiteinheit (223) ausbilden, und/oder
- vorzugsweise Anordnen (1040) einer Dämpfungseinheit (230) zwischen der Luftleitvorrichtung (220) und der Kühleinheit (210).

15. Verfahren (2000) zur Herstellung einer Windenergieanlage (100), **gekennzeichnet durch** die Schritte:
- Bereitstellen (2010) einer Rotationseinheit (310) eines aerodynamischen Rotors (106) der Windenergieanlage (100) mit einer Rotationseinheits-Außenfläche (310a), entlang welcher der Wind (W) im Betrieb der Windenergieanlage (100) strömt,
- Anordnen (2020) einer oder mehrerer Luftführungseinheiten (320) an der Rotationseinheits-Außenfläche (310a) der Rotationseinheit (310) zwischen den Anschlüssen oder den Durchgangsöffnungen, und/oder
- Befestigen (2030) der Rotationseinheit (310) an einem Generator, insbesondere einem Generator nach Anspruch 9 oder einem gemäß dem Verfahren nach einem der Ansprüche 13 oder 14 hergestellten Generator.
